# EUROPÄISCHE PATENTSCHRIFT

(11) **EP 4 047 220 B1**
(45) Veröffentlichungstag und Bekanntmachung des Hinweises auf die Patenterteilung: **28.06.2023**
(21) Anmeldenummer: 22155235.9
(22) Anmeldetag: 04.02.2022
(51) Int. Cl.: F16B 2/10, F16B 7/04, F16B 37/04

(54) **MONTAGE-EINHEIT MIT ZUMINDEST EINER MONTAGESCHIENE UND WENIGSTENS EINER HALTEKLAMMER**
ASSEMBLY UNIT WITH AT LEAST ONE ASSEMBLY RAIL AND AT LEAST ONE RETAINING CLIP
UNITÉ DE MONTAGE POURVUE D'AU MOINS UN RAIL DE MONTAGE ET D'AU MOINS UNE PINCE DE RETENUE

(30) Priorität: 19.02.2021 DE 102021103973
(43) Veröffentlichungstag der Anmeldung: 24.08.2022
(73) Patentinhaber: Sikla Holding GmbH, 4614 Marchtrenk (AT)
(72) Erfinder: Menz, Peter, 78661 Dietingen (DE); Maute, Mario, 78628 Rottweil (DE)
(74) Vertreter: Mertzlufft-Paufler, Cornelius

(56) Entgegenhaltungen:
- EP-A1- 1 342 860
- DE-A1- 10 322 058
- FR-A1- 3 029 550

## Beschreibung

Die Erfindung betrifft eine Montage-Einheit mit zumindest einer Montageschiene, an der wenigstens eine Halteklammer lösbar fixierbar ist.

Aus der DE 103 22 058 A ist eine Montage-Einheit bekannt mit zumindest Montageschiene, an der zwei Halteklammern lösbar fixierbar sind, wobei die Halteklammern an den zumindest eine Schienen-Längsseite begrenzenden Schienen-Längsrändern angreifen und dazu Klammerteile haben, die jeweils eine den benachbarten Schienen-Längsrand hintergreifende Klammer-Kralle aufweisen.

Aus der DE 100 18 287 A1 ist ein Installationselement für den Trockenbau mit einem Grundrahmen vorbekannt, in dem ein Hilfsrahmen befestigbar ist, an dem ein Frischwasser- oder ein Abwasseranschluss sowie weitere Installationskomponenten anbringbar sind. Der Hilfsrahmen ist aus Montageschienen gebildet und kann mit Bodenstützen auf dem Untergrund oder einer Bodenstrebe des Grundrahmens abgestützt werden. Um die Montageschiene des Hilfsrahmens am Grundrahmen befestigen zu können, sind Haltemittel vorgesehen, die mit einem Haltezapfen in eine stirnseitige Schienenöffnung einer Montageschiene des Hilfsrahmens einsetzbar und dort mit widerhakenartigen Vorsprüngen am Haltezapfen fixierbar ist. Diese Haltemittel tragen an ihrem über den Haltezapfen nach außen vorstehenden Teilbereich eine Haltekralle, die eine Strebe des Grundrahmens zur Hälfte umgreifen kann. Die Profilstreben des Grundrahmens weisen in den vier Eckbereichen ihres Profilquerschnittes Ausnehmungen in Form längslaufender Nuten auf, von denen in zwei dieser Haltenuten die Halteklaue fixierend eingreift. Das vorbekannte Installationselement mit seinem Grund- und seinem Hilfsrahmen ist jedoch auf die Montage einer Vorwandinstallation beschränkt.

Aus der DE 101 16 322 A1 kennt man bereits eine Montage-Einheit der eingangs erwähnten Art mit zumindest einer als Profilleiste ausgebildeten Montageschiene, an der wenigstens eine Halteklammer befestigbar ist. Die Halteklammer ist aus zwei Grundplatten gebildet, die jeweils um 90° zueinander abgewinkelte Haltekanten aufweisen, welche zur Hintergreifung von Vorsprüngen an den Profilleisten dienen. In jede der beiden Grundplatten ist ein etwa korbartiger Spannbogen eingesetzt, der eine etwa U-förmige Seitenkontur aufweist und an den freien Enden seiner beiden Schenkel abgekantete Halteleisten hat, mit denen er sich an den beiden Grundplatten festlegt. Die Spannbögen beider Grundplatten weisen jeweils mehrere U-förmig verlaufende Stege auf, die so zueinander angeordnet sind, dass sich die beiden Spannbögen gegenseitig durchdringen können. Durch diese Durchdringung schaffen die beiden Spannbögen zwischen sich einen Aufnahmekanal, in welchem ein Spannelement angeordnet ist. Das Spannelement ist als eine Art Kulissenstein mit länglichem Querschnitt ausgestaltet. In der Montagestellung des Verbindungselementes liegt das Spannelement flach innerhalb des Aufnahmekanals, so dass die beiden Spannbögen eine minimale gegenseitige Durchdringung aufweisen und die zugehörigen Grundplatten demzufolge einen maximalen Abstand zueinander haben. Das Spannelement ist mit einem Betätigungshebel verbunden, wobei auf der Rückseite der Grundplatte Ausschnitte vorgesehen sind, die eine Schwenkbewegung des Betätigungshebels ermöglichen. Auf diese Weise kann das Spannelement innerhalb des Aufnahmekanals verdreht werden, beispielsweise um 90°. Während dieser Schwenkbewegung vergrößert der längliche Querschnitt des Spannelementes das Maß der gegenseitigen Durchdringung der beiden Spannbögen, so dass diese mit Hilfe der Halteleisten die beiden Grundplatten zueinander ziehen, so dass sich die Haltekanten der beiden Grundplatten einander nähern und die Profilleisten zwischen sich festlegen. Die Kontur des Spannelementes ist dabei so gewählt, dass sich während der Schwenkbewegung zwischen der Montagestellung und der um 90° dazu vorgesehenen Spannstellung wenigstens eine Raststellung als Zwischenstellung ergibt. In dieser Zwischenstellung ist ein vorläufiger Halt des Verbindungselementes an den Profilleisten möglich. Die Profilleisten können in dieser Zwischenstellung gegenüber dem Verbindungselement verschoben und nachjustiert werden, bevor dann die endgültige Festlegung erfolgt und das Spannelement in seine Spannstellung verschwenkt wird.

Die Herstellung der aus DE 101 16 322 A1 vorbekannten Montage-Einheit und ihrer Halteklammer ist jedoch mit einem vergleichsweise hohen Aufwand verbunden.

Es besteht daher die Aufgabe, eine Montage-Einheit der eingangs erwähnten Art zu schaffen, die sich möglichst einfach handhaben und mit vergleichsweise geringem Aufwand herstellen lässt und die sich gleichzeitig durch eine hohe Belastbarkeit auszeichnet.

Die erfindungsgemäße Lösung dieser Aufgabe besteht bei der Montage-Einheit der eingangs erwähnten Art insbesondere darin, dass die wenigstens eine Halteklammer an den zumindest eine Schienen-Längsseite begrenzenden Schienen-Längsrändern angreift und dazu zwei Klammerteile hat, die jeweils mindestens eine, einen benachbarten Schienen-Längsrand der die Schienen-Längsseite begrenzenden Schienen-Längsränder hintergreifende Klammer-Kralle aufweisen, und von denen ein den einen Schienen-Längsrand hintergreifendes erstes Klammerteil wenigstens eine, von mindestens einer Auflaufschräge begrenzte Ausformung und ein, den anderen Schienen-Längsrand hintergreifendes zweites Klammerteil zumindest eine, von wenigstens einer Gegenschräge begrenzte Einformung oder Aussparung tragen, dass die Ausformung einerseits und die Einformung bzw. Aussparung andererseits der aneinander anliegenden Klammerteile in der Halteposition der Halteklammer formschlüssig aufeinander positioniert sind, dass das erste und das zweite Klammerteil zwischen einer Halte- oder einer Vormontageposition, in welcher die die Schienen-Längsseite begrenzenden Schienen-Längsränder mittels der einander angenäherten Klammer-Krallen hintergreifbar sind, und einer Offenposition relativ zueinander verschiebbar und/oder verschwenkbar sind, in welcher Offenposition die Klammer-Krallen demgegenüber auf Abstand gebracht sind, und dass die Schiebe- und/oder Schwenkbewegung der Klammerteile der wenigstens einen Halteklammer von der Halte- oder Vormontageposition in die Offenposition oder umgekehrt gegen die Kraft mindestens eines Federelements erfolgt.

Die erfindungsgemäße Montage-Einheit weist zumindest eine Montageschiene auf, an der wenigstens eine Halteklammer lösbar befestigbar ist, welche in einer Halte- beziehungsweise Vormontageposition an den, zumindest eine Schienen-Längsseite begrenzenden Schienen-Längsrändern angreift. Die Halteklammer der erfindungsgemäßen Montage-Einheit hat dazu zwei Klammerteile, die jeweils mindestens eine, einen benachbarten Schienen-Längsrand der die Schienen-Längsseite begrenzenden Schienen-Längsränder hintergreifende Klammer-Kralle aufweisen. Von diesen Klammerteilen trägt ein, den einen Schienen-Längsrand hintergreifendes erstes Klammerteil wenigstens eine von mindestens einer Auflaufschräge begrenzte Ausformung, während ein, den anderen Schienen-Längsrand hintergreifendes zweites Klammerteil zumindest eine, von wenigstens einer Gegenschräge begrenzte Einformung oder Aussparung aufweist. Diese Einformung oder Aussparung einerseits und diese Ausformung andererseits sind in der Halteposition der aneinander anliegenden Klammerteile formschlüssig aufeinander positioniert. Da die Ausformung des ersten Klammerteiles durch mindestens eine Auflaufschräge begrenzt ist, und da das zweite Klammerteil zumindest eine, von wenigstens einer Gegenschräge begrenzte Einformung oder Aussparung hat, können diese Klammerteile der wenigstens einen Halteklammer über den in der Halteposition erzeugten Formschluss der an den Klammerteilen vorgesehenen und zueinander komplementären Geometrien an die Montageschiene gespannt werden. Dabei kann die mittels der Klammer-Krallen übertragene Klemmkraft der Halteklammer durch einen Versatz dieser einander zugeordneten und an den Klammerteilen vorgesehenen Geometrien zueinander erzeugt werden. Das erste und das zweite Klammerteil sind zwischen der Halte- oder einer Vormontageposition, in welcher die Schienen-Längsränder mittels der aneinander angenäherten Klammer-Krallen hintergreifbar sind, und einer Offenposition relativ zueinander verschiebbar und/oder verschwenkbar, in welcher Offenposition die Klammer-Krallen demgegenüber derart auf Abstand gebracht sind, dass sich die Klammerteile mit ihren Klammer-Krallen an den die Schienen-Längsseite begrenzenden Schienen-Längsrändern leicht lösen lassen. Da die Klammerteile nur wenig in eine quer zur Schienen-Längsrichtung auseinandergezogene Relativposition aneinander verschoben oder zueinander verschwenkt werden müssen, damit diese Klammerteile mit ihren Klammer-Krallen an den beidseits einer Schienen-Längsseite angeordneten Schienen-Längsrändern angreifen können, und da die Schiebe- und/oder Schwenkbewegung der Klammerteile der wenigstens einen Halteklammer von der Halte- oder der Vormontageposition in die Offenposition oder umgekehrt gegen die Kraft mindestens eines Federelements erfolgt, ist die Handhabung der Halteklammer vergleichsweise einfach. Da die wenigstens eine Halteklammer der erfindungsgemäßen Montage-Einheit aus konstruktiv vergleichsweise einfachen Bestandteilen besteht, ist die Halteklammer mit einem vergleichsweise geringen Aufwand herstellbar. Aufgrund der einfachen und stabilen Ausgestaltung ihrer Bestandteile zeichnet sich die wenigstens eine Halteklammer auch durch eine hohe Belastbarkeit aus.

Damit die Klammerteile in der Halteposition fest und unverrückbar aneinander anliegen, müssen die an den Klammerteilen vorgesehenen Geometrien, nämlich die am ersten Klammerteil angeordnete Ausformung einerseits und die am zweiten Klammerteil vorgesehene Einformung oder Aussparung andererseits, lediglich formgleich beziehungsweise komplementär zueinander ausgebildet sein, so dass diese Geometrien beim Aufeinanderlegen der Klammerteile in der Halteposition einen Formschluss bilden. Damit die relativ zueinander verschiebbaren Klammerteile der Halteklammer lagegerecht in ihrer Halteposition aneinander anliegen, ist es aber besonders vorteilhaft, wenn die Einformung oder Aussparung einerseits und die Ausformung andererseits jeweils einen quadratischen oder rautenförmigen Querschnitt aufweisen. Durch diesen quadratischen oder rautenförmigen Querschnitt der Einformung oder Aussparung einerseits und der mit ihr zusammenwirkenden Ausformung andererseits werden die Klammerteile einer jeden Halteklammer positionsgenau aneinander geführt.

Eine bevorzugte Ausführungsform gemäß der Erfindung, die einen festen Halt der Halteklammer an der Schienen-Längsseite der Montageschiene begünstigt, sieht vor, dass an dem, in der Halte- oder Vormontageposition an der zumindest einen Schienen-Längsseite anliegenden ersten Klammerteil die Ausformung vorgesehen ist, die in die der Montageschiene abgewandte und somit in die dem zweiten Klammerteil zugewandte Richtung vorsteht.

Eine besonders einfache und leicht herstellbare Ausführungsform gemäß der Erfindung sieht vor, dass die am ersten Klammerteil vorgesehene Ausformung und die am zweiten Klammerteil vorgesehene Einformung jeweils als vorzugsweise formgleiche Ausprägung dieser Klammerteile ausgebildet sind.

Die Montageschiene der erfindungsgemäßen Montage-Einheit kann leistenförmig ausgebildet sein und nur eine vorderbeziehungsweise rückseitige Schienen-Längsseite haben. Möglich ist auch, die Montageschiene in der Form eines Doppel-T-Trägers auszugestalten.

Eine bevorzugte Ausführungsform gemäß der Erfindung sieht jedoch vor, dass die Montageschiene im Schienen-Querschnitt eine rechteckige und vorzugsweise eine quadratische Außen-Querschnittskontur aufweist. Eine solche Montageschiene, die eine rechteckige und vorzugsweise eine quadratische Außen-Querschnittskontur hat, erlaubt es, dass an ihr allseits Halteklammern befestigt werden können.

Um einen festen Halt der wenigstens einen Halteklammer an der zumindest einen Montageschiene zu begünstigen, ist es vorteilhaft, wenn die Montageschiene in jedem ihrer Eckbereiche eine Nut aufweist, deren Nutöffnung durch die an den jeweiligen Schienen-Eckbereich angrenzenden Schienen-Längsränder begrenzt ist.

Die Klammerteile einer jeden Halteklammer können sich mit ihren Klammer-Krallen besonders gut an der Montageschiene verkrallen, wenn die in den Schienen-Eckbereichen angeordneten Nuten als Schwalbenschwanz-Nuten ausgebildet sind.

Um auch die zumindest eine Montageschiene der erfindungsgemäßen Montage-Einheit möglichst belastbar auszugestalten, ist es vorteilhaft, wenn die Montageschiene als Hohlprofil ausgebildet ist, das eine im Querschnitt umlaufende Profilwandung aufweist.

Dabei wird eine Ausführung bevorzugt, bei welcher die Diagonalen des quadratischen oder rautenförmigen Querschnitts der Ausformung einerseits und der Einformung bzw. Aussparung andererseits in Schienen-Längsrichtung beziehungsweise rechtwinklig zur Schienen-Längsrichtung orientiert sind. Während also die eine Diagonale des quadratischen oder rautenförmigen Querschnitts der Einformung oder Aussparung einerseits sowie der Ausformung andererseits in Schienen-Längsrichtung orientiert ist, ist die andere Diagonale des Querschnittes rechtwinklig zur Schienen-Längsrichtung angeordnet.

Damit die wenigstens eine Halteklammer an der ihr zugeordneten Montageschiene nicht in Schienen-Längsrichtung verrutschen kann, ist es vorteilhaft, wenn an zumindest einem Schienen-Längsrand der eine Schienen-Längsseite begrenzenden Schienen-Längsränder eine sich in Schienen-Längsrichtung erstreckende Profilierung vorgesehen ist, die zumindest mit einer Rastnocke oder einer Gegenprofilierung an der mindestens einen Klammer-Kralle wenigstens eines der Klammerteile der Halteklammer zusammenwirkt. Da bei dieser Ausführungsform die an der mindestens einen Klammer-Kralle vorgesehene Rastnocke oder Gegenprofilierung in die am benachbarten Schienen-Längsrand vorgesehene Profilierung eingreift, wird ein Verrutschen der Halteklammer in Schienen-Längsrichtung in der Halteposition ihrer Klammerteile vermieden.

Um die wenigstens eine Halteklammer der erfindungsgemäßen Montage-Einheit an der zumindest einen Montageschiene belastbar befestigen zu können, ist es vorteilhaft, wenn die Klammerteile mittels einer Spanneinrichtung in ihrer Halteposition aneinander fixierbar sind.

Dabei sieht eine weiterbildende Ausführungsform gemäß der Erfindung vor, dass das erste Klammerteil einen Gewindestab oder Spannzapfen der Spanneinrichtung trägt, der eine Durchstecköffnung am zweiten Klammerteil durchsetzt, und dass die Spanneinrichtung eine Gewindemutter oder ein Spannelement aufweist, das eine auf die Gewindemutter oder das Spannelement ausgeübte Drehbewegung in eine Längsbewegung der Gewindemutter oder des Spannelements am Gewindestab oder am Spannzapfen umsetzt. Durch diese Längsbewegung wird das zweite Klammerteil derart in Richtung zum ersten Klammerteil gedrückt, dass die an diesen aneinander anliegenden Klammerteilen vorgesehenen Geometrien, nämlich die Ausformung des ersten Klammerteils und die Einformung beziehungsweise Aussparung des zweiten Klammerteils, formschlüssig und unverrückbar ineinander eingreifen.

Um die Schiebe- und/oder Schwenkbewegung der einander zugeordneten Klammerteile zu ermöglichen und vorzugsweise auch zu begrenzen, kann es vorteilhaft sein, wenn die Durchstrecköffnung am zweiten Klammerteil als ein quer zur Schienen-Längsrichtung orientiertes Langloch ausgebildet ist.

Eine weiterbildende Ausführungsform gemäß der Erfindung sieht vor, dass die Klammerteile der wenigstens einen Halteklammer aus der Halteposition gegen die Rückstellkraft des mindestens einen Federelements in die Offenposition verschiebbar sind.

Dabei ist es zweckmäßig, wenn der Abstand zwischen den, an den Klammerteilen der wenigstens einen Halteklammer vorgesehenen Klammer-Krallen von der Halteposition durch Aufdrücken der wenigstens einen Halteklammer auf die Montageschiene in die Offenposition aufweitbar ist, und/oder, wenn die Klammerteile sich aus der Offenposition durch die Rückstellkraft des mindestens einen Federelements in die Halteposition zurückbewegen.

Um die aneinander verschieblich gehaltenen Klammerteile der wenigstens einen Halteklammer fest aneinander zu halten und um die Handhabung dieser Halteklammer zu erleichtern, kann es zweckmäßig sein, wenn an dem zweiten Klammerteil zumindest ein Federbügel vorgesehen ist, der den benachbarten Randbereich des ersten Klammerteiles untergreift.

Damit dieser Federbügel auch als Rückstellelement dienen kann und damit der als Rückstellelement ausgebildete Federbügel auch eine quer zur Schienen-Längsrichtung orientierte Rückstellkraft bewirkt, kann es vorteilhaft sein, wenn der als Rückstellelement dienende Federbügel eine Schrägfläche am ersten Klammerteil federnd beaufschlagt, und wenn der die Schrägfläche beaufschlagende Federbügel eine Rückstellkraft in die Halteposition der Klammerteile bewirkt.

Dabei sieht eine besonders einfache und vorteilhafte Ausführungsform gemäß der Erfindung vor, dass die die Ausprägung am ersten Klammerteil rückseitig ausformende(n) Schrägfläche(n) bereichsweise als Schrägfläche für den Federbügel ausgebildet ist/sind.

Bei einem demgegenüber abweichend ausgestalteten Ausführungsbeispiel gemäß der Erfindung kann es vorteilhaft sein, wenn die Klammerteile der wenigstens einen Halteklammer in der Offenposition formschlüssig derart ineinandergreifen, dass diese Klammerteile in der Offenposition verbleiben und/oder wenn der Formschluss der Klammerteile in Offenposition durch Druckbeaufschlagung des zweiten Klammerteiles in eine zum ersten Klammerteil orientierte Kraftrichtung derart auflösbar ist, dass diese Klammerteile sich durch die Kraft des mindestens einen Federelements in die Halte- oder Vormontageposition bewegen.

Um bei einer solchen Ausführungsform gemäß der Erfindung die Klammerteile derart gegeneinander verspannen zu können, dass diese Klammerteile in der Offenposition verbleiben, kann es zweckmäßig sein, wenn das Federelement als zumindest eine zwischen dem ersten und dem zweiten Klammerteil angeordnete Druckfeder ausgebildet ist. Damit aber diese Druckfeder die in der Halteposition gegeneinander verpressten Klammerteile nicht behindert, und damit diese Druckfeder in der Halteposition möglichst flach zwischen den Klammerteilen komprimiert werden kann, ist es zweckmäßig, wenn diese Druckfeder als multigewellte Federscheibe ausgebildet ist.

Bei dem letztgenannten Ausführungsbeispiel können die Klammerteile der wenigstens einen Halteklammer leicht in der Offenposition gehalten werden, wenn an dem zweiten Klammerteil vorzugsweise beidseits zumindest eine Haltenase seitlich vorsteht, die in der Offenposition in einer zugeordneten Haltestufe des ersten Klammerteils gehalten ist, welche Haltestufe in die dem zweiten Klammerteil abgewandte Richtung offen ausgebildet ist. Durch eine leichte manuelle Druckbeaufschlagung des zweiten Klammerteiles in Richtung zum ersten Klammerteil kann die zumindest eine Haltenase des zweiten Klammerteiles aus der Haltestufe des ersten Klammerteils ausrücken, so dass sich das zweite Klammerteil relativ zum ersten Klammerteil an diesem verschieben lässt, bis die an den Klammerteilen vorgesehenen Klammer-Krallen in der Halte- oder Vormontageposition aneinander angenähert sind.

Damit die Klammerteile der wenigstens einen Halteklammer eine kontrollierte Schiebe- und/oder Schwenkbewegung zwischen der Offen- und der Halte- bzw. Vormontageposition durchführen, ist es vorteilhaft, wenn an dem ersten Klammerteil vorzugsweise beidseits eine Führungskulisse vorgesehen ist, an welcher/welchen Führungskulisse(n) ein zugeordneter Gleitzapfen anliegt, welche(r) Gleitzapfen am zweiten Klammerteil seitlich vorsteht/vorstehen.

Eine solche kontrollierte Bewegungsführung des ersten Klammerteiles relativ zum zweiten Klammerteil wird noch begünstigt, wenn die an zumindest einer Längsseite des zweiten Klammerteiles vorgesehene Haltenase einerseits und Gleitzapfen andererseits voneinander beabstandet sind.

Die leichte Handhabung der wenigstens einen Halteklammer der erfindungsgemäßen Montage-Einheit wird noch zusätzlich begünstigt, wenn das erste Klammerteil längsseitig Führungswände trägt, zwischen denen das zweite Klammerteil verschieblich geführt ist. Um solche Führungswände auszubilden, können die Längsränder des ersten Klammerteiles in Richtung zum zweiten Klammerteil abgewinkelt sein und die Führungswände ausformen.

Dabei sieht eine besonders einfach herstellbare Ausführungsform gemäß der Erfindung vor, dass die Führungswände des ersten Klammerteiles jeweils einerseits die Haltestufe und andererseits die Führungskulisse tragen.

Weiterbildungen gemäß der Erfindung ergeben sich aus der nachfolgenden Beschreibung bevorzugter Ausführungsbeispiele in Verbindung mit den Ansprüchen sowie der Zeichnung. Nachstehend wird die Erfindung anhand bevorzugter Ausführungsbeispiele noch näher beschrieben.

Es zeigt:
- Fig. 1: eine in einer perspektivischen Seitenansicht dargestellte Montage-Einheit mit einer Montageschiene, an der zumindest eine Halteklammer angreift, die zwei aneinander anliegende und quer zur Schienen-Längsrichtung relativ zueinander verschiebbare Klammerteile hat, die mittels einer Spanneinrichtung aufeinander verspannt werden können, wobei diese Spanneinrichtung einen vom ersten Klammerteil getragenen Gewindestab hat, auf dem eine Gewindemutter aufgeschraubt ist, die zwischen sich und dem ersten Klammerteil ein zweites Klammerteil fest einspannt,
- Fig. 2: die Montageschiene und die Halteklammer aus Figur 1 in einer perspektivischen Seitenansicht ohne den Gewindestab, wobei die Klammerteile der Halteklammer leicht auseinandergezogen sind, um die Halteklammer zu verschieben oder von der Montageschiene zu lösen,
- Fig. 3: die Montageschiene und die Halteklammer aus den Figuren 1 und 2 in der Halteposition der Klammerteile, in der die an den Schienen-Längsrändern einer Schienen-Längsseite der Montageschiene angreifenden Klammerteile formschlüssig aneinander anliegen,
- Fig. 4: die Montageschiene und die Halteklammer in einer Seitenansicht in der in Figur 2 gezeigten auseinandergezogenen Offenposition der Klammerteile,
- Fig. 5: die Klammerteile der Halteklammer in ihrer aneinander anliegenden Halteposition,
- Fig. 6: die Halteklammer der in den Figuren 1 bis 5 gezeigten Montage-Einheit in einer perspektivischen Unteransicht auf das an der Schienen-Längsseite anlegbare erste Klammerteil,
- Fig. 7: das zweite Klammerteil der in Figur 5 gezeigten Halteklammer in einer Unteransicht,
- Fig. 8: die Montageschiene der hier gezeigten Montage-Einheit in einer Seitenansicht,
- Fig. 9: die Montageschiene mit der an ihr gehaltenen Halteklammer in einer Stirnansicht mit Blick auf die in ihrer Halteposition aneinander anliegenden Klammerteile,
- Fig. 10: die Montageschiene mit der an ihr gehaltenen Halteklammer, wobei die Klammerteile der Halteklammer sich hier in einer quer zur Schienen-Längsrichtung auseinandergezogenen Offenstellung befinden,

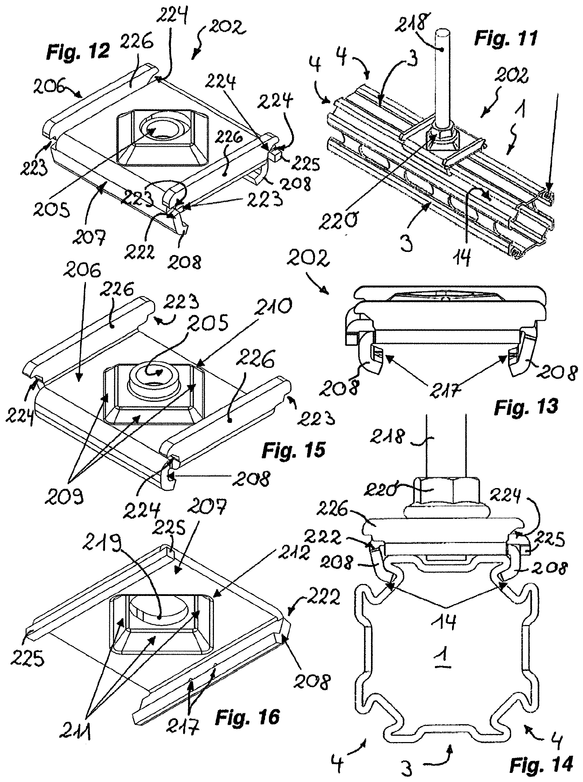

- Fig. 11: ein weiteres Ausführungsbeispiel einer hier perspektivisch dargestellten Montage-Einheit, die zumindest eine Montageschiene und wenigstens eine daran lösbar montierbare Halteklammer aufweist, wobei die Halteklammer ein erstes Klammerteil hat, an dem Führungswände vorstehen, zwischen denen ein zweites Klammerteil verschieblich und verschwenkbar geführt ist und wobei die Klammerteile ebenfalls mittels einer Spanneinrichtung aneinander gepresst und in der hier gezeigten Halteposition aneinander fixiert sind, welche Spanneinrichtung hier einen am ersten Klammerteil flachseitig vorstehenden Gewindestab hat, auf dem eine Gewindemutter als Spannelement aufgeschraubt ist, welches Spannelement eine Drehbewegung in eine axiale Bewegung am Gewindestab umsetzt,
- Fig. 12: die Halteklammer der in Figur 11 gezeigten Montage-Einheit in einer perspektivischen Draufsicht auf die der Montageschiene abgewandte Flachseite,
- Fig. 13: die Halteklammer aus Figur 12 in einer Seitenansicht,
- Fig. 14: die Montage-Einheit aus Figur 11 in einer Seitenansicht mit Blick auf die in der Halteposition an der Montageschiene fixierte Halteklammer,
- Fig. 15: das an der Montageschiene anlegbare erste Klammerteil der in den Figuren 11 bis 14 gezeigten Halteklammer in einer perspektivischen Draufsicht,
- Fig. 16: das zweite Klammerteil der in den Figuren 11 bis 14 gezeigten Halteklammer in einer perspektivischen Darstellung mit Blick auf die dem ersten Klammerteil zugewandte Unterseite des zweiten Klammerteiles,
- Fig. 17: die hier ohne die Spanneinrichtung gezeigte und hier aus der Montageschiene und der Halteklammer bestehende Montage-Einheit aus den Figuren 11 und 14 in einer Seitenansicht in der Offenposition der Halteklammer,
- Fig. 18: die Montage-Einheit aus Figur 17 in einer Vormontageposition der Halteklammer,
- Fig. 19: die Montage-Einheit aus Figur 17 und 18 in der Halteposition, in der die Halteklammer an der Montageschiene unverrückbar fixiert ist,
- Fig. 20: die in ihrer Offenposition gezeigte Halteklammer aus den Figuren 11, 14 und 17 bis 19,
- Fig. 21: die ohne die Spanneinrichtung in einer perspektivischen Unteransicht dargestellte Halteklammer aus den Figuren 11 bis 14 und 17 bis 20 in der Halteposition,
- Fig. 22: das zweite Klammerteil der in den Figuren 11 bis 14 und 17 bis 21 gezeigten Halteklammer in seiner Seitenansicht,
- Fig. 23: das erste Klammerteil der in den Figuren 11 bis 14 und 17 bis 21 dargestellten Halteklammer in einer perspektivischen Draufsicht auf die dem zweiten Klammerteil zugewandte Flachseite,
- Fig. 24: das zweite Klammerteil der in den Figuren 11 bis 14 und 17 bis 21 dargestellten Halteklammer in einer perspektivischen Unteransicht mit Blick auf die auf dem ersten Klammerteil aufliegende Unterseite,
- Fig. 25: das zweite Klammerteil aus Figur 21 in einer perspektivischen Seitenansicht,
- Fig. 26: das erste Klammerteil aus Figur 23 in einer perspektivischen Seitenansicht mit Blick auf die, auf der dem zweiten Klammerteil zugewandten Flachseite aufliegenden Feder-Druckscheibe multigewellt,
- Fig. 27: die Montageschiene der in den Figuren 1 bis 26 gezeigten Montage-Einheiten in einer Stirnansicht,
- Fig. 28: die Montageschiene aus Figur 27 in einer perspektivischen Darstellung mit Blick auf eine ihrer Stirnseiten sowie einen benachbarten längsseitigen Schienen-Teilbereich,
- Fig. 29: die Montageschiene aus den Figuren 27 und 28 in einer Draufsicht auf eine ihrer Längsseiten,
- Fig. 30: die Montageschiene aus den Figuren 27 bis 29 in einer Perspektivdarstellung, wobei die an den Schienen-Längsseiten in gleichmäßigen Abständen angeordneten Befestigungslöcher zu erkennen sind,
- Fig. 31: die gegenüber den Figuren 27 bis 30 lochfrei und somit ohne Befestigungslöcher ausgestaltete Montageschiene,
- Fig. 32: die Halteklammer aus den Figuren 11 bis 14 und 17 bis 21 in einer Seitenansicht in ihrer Offenstellung,
- Fig. 33: eine mit Figur 27 vergleichbare Stirnansicht der in den Figuren 27 bis 30 gezeigten Montageschiene,
- Fig. 34: die an einer Montageschiene in ihrer Vormontageposition gehaltene Halteklammer aus den Figuren 11 bis 14, 17 bis 21 und 32,
- Fig. 35: die an einer Montageschiene in ihrer Halteposition fixierte Halteklammer aus den Figuren 11 bis 14, 17 bis 21, 32 und 34 in einer Seitenansicht ohne eine Spanneinrichtung, und
- Fig. 36: die mittels einer Spanneinrichtung an einer Montageschiene in ihrer Halteposition lösbar, aber unverrückbar fixierte Halteklammer.

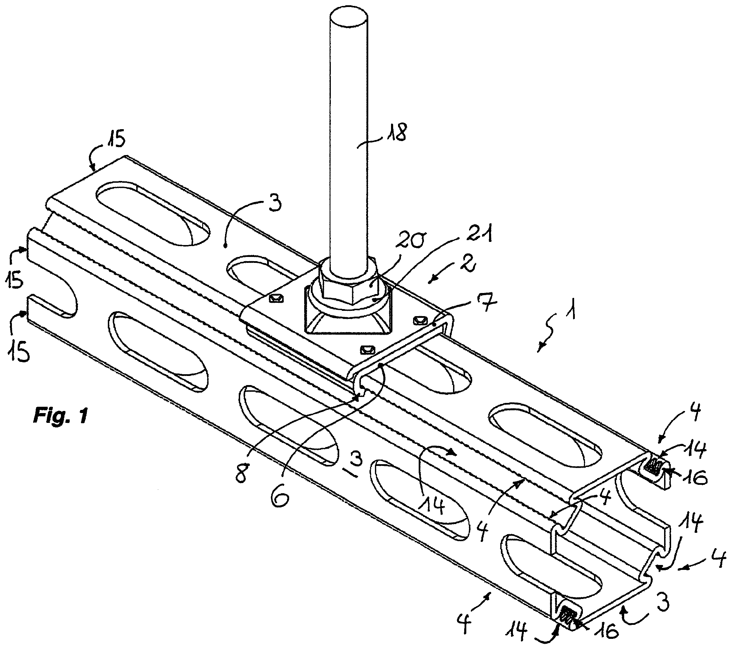

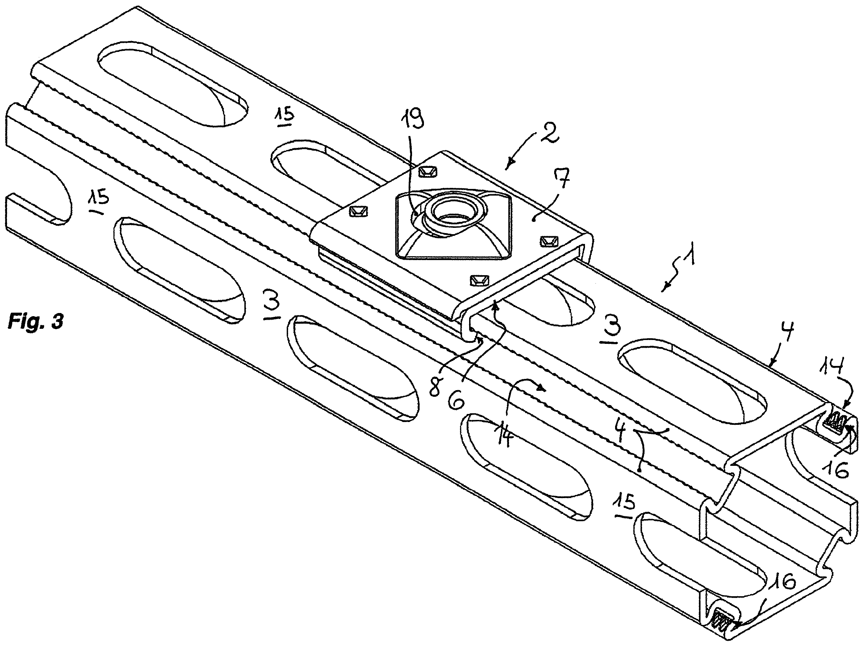

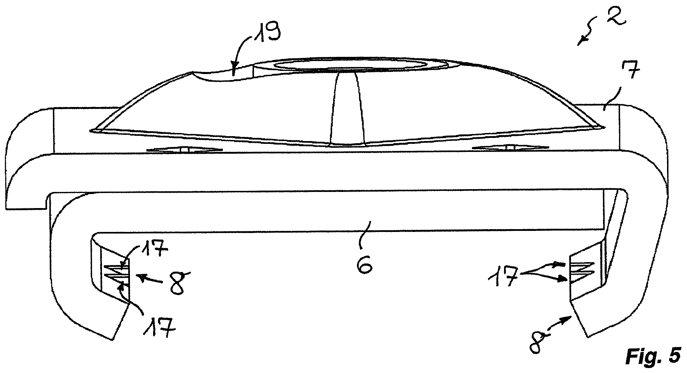

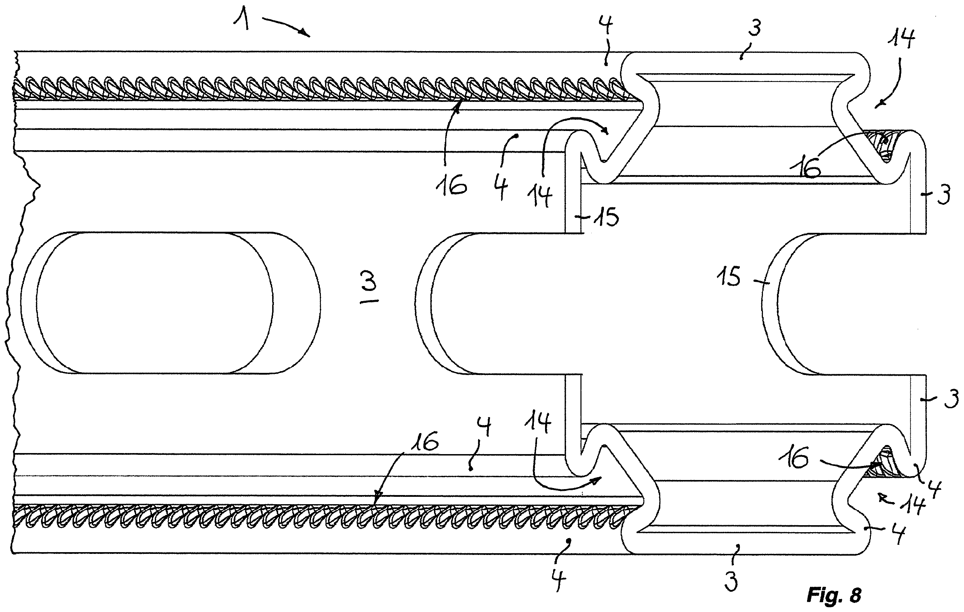

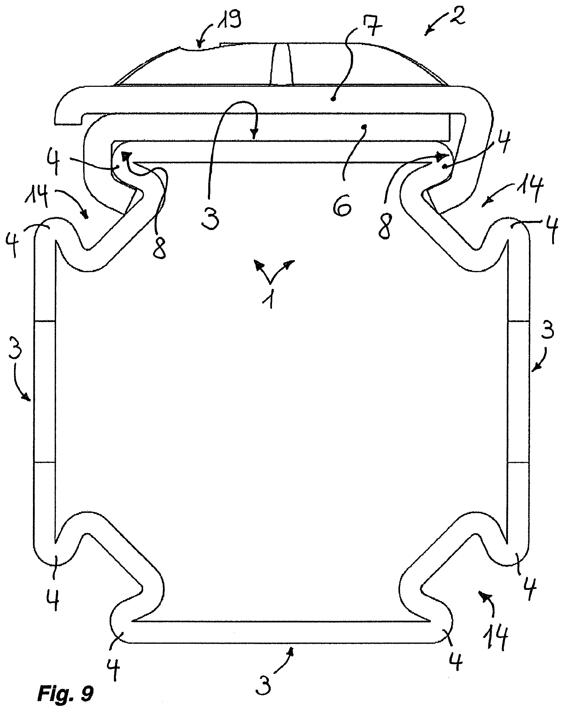

In den Figuren 1 bis 36 sind zwei verschiedene Ausführungen einer Montage-Einheit und ihrer Bestandteile dargestellt, die beispielsweise in der Gebäudetechnik für eine Vorwandinstallation oder im Anlagenbau verwendet werden können. Die hier dargestellten Montage-Einheiten weisen zumindest eine Montageschiene 1 auf, an der wenigstens eine Halteklammer 2, 202 lösbar befestigbar ist, welche an den zumindest eine Schienen-Längsseite 3 begrenzenden Schienen-Längsrändern 4 angreift. Die Halteklammern 2, 202 der hier dargestellten Montage-Einheiten haben dazu zwei Klammerteile 6, 7; 206, 207, die jeweils mindestens eine, einen benachbarten Schienen-Längsrand 4 der die Schienen-Längsseite 3 begrenzenden Schienen-Längsränder 4 hintergreifende Klammer-Kralle 8, 208 aufweisen. Von diesen Klammerteilen 6, 7; 206, 207 trägt ein, den einen Schienen-Längsrand 4 hintergreifendes erstes Klammerteil 6, 206 wenigstens eine von mindestens einer Auflaufschräge 9, 209 begrenzte Ausformung 10, 210, während ein, den anderen Schienen-Längsrand 4 hintergreifendes zweites Klammerteil 7, 207 zumindest eine von wenigstens einer Gegenschräge 11, 211 begrenzte Einformung 12, 212 aufweist. Statt einer solchen Einformung 12, 212 könnte am zweiten Klammerteil 7, 207 auch eine hier nicht weiter dargestellte, als Durchtrittsloch oder Sackloch ausgebildete Aussparung vorgesehen sein, in welche Aussparung die am ersten Klammerteil 6, 206 angeordnete Ausformung 10, 210 eintauchen kann.

Die Ausformungen 10, 210 und die ihnen zugeordneten Einformungen 12, 212 der aneinander anliegenden Klammerteile 6, 7; 206, 207 sind in der in den Figuren 1, 3, 5, 6 und 9 sowie in den Figuren 11 bis 14, 19, 21, 32 und 35 bis 36 gezeigten Halteposition formschlüssig aufeinander positioniert. Die Halteklammern 2, 202 der in den Figuren 1 bis 10 und 11 bis 36 dargestellten Montage-Einheiten greifen in dieser Halteposition und gegebenenfalls auch in einer Vormontageposition an den zumindest eine Schienen-Längsseite 3 begrenzenden Schienen-Längsrändern 4 der Montageschiene 1 an. In der Halteposition, in der die Halteklammern 2, 202 an der Montageschiene 1 mit einer weiter unten näher beschriebenen Spanneinrichtung unverrückbar, aber gleichzeitig auch leicht lösbar fixiert sind, sind die am ersten Klammerteil 6, 206 vorgesehene Ausformung 10, 210 einerseits und die am zweiten Klammerteil 7, 207 angeordnete Einformung 12, 212 oder Aussparung andererseits der aneinander anliegenden Klammerteile 6, 7; 206, 207 formschlüssig aufeinander positioniert. Das erste Klammerteil 6, 206 und das zweite Klammerteil 7, 207 ist zwischen der Halte- oder der Vormontageposition, in welcher die Schienen-Längsränder 4 mittels der einander angenäherten Klammer 8, 208 hintergreifbar sind, und einer Offenposition relativ zueinander verschiebbar und/oder verschwenkbar, in welcher Offenposition die Klammer-Krallen 8, 208 demgegenüber derart auf Abstand gebracht sind, dass sich die Halteklammer 2, 202 leicht von der Montageschiene 1 lösen lässt. Dabei erfolgt die Schiebe- und/oder Schwenkbewegung der Klammerteile 6, 7; 206, 207 der wenigstens einen Halteklammer 2, 202 von der Halte- oder Vormontageposition in die Offenposition oder umgekehrt gegen die Kraft mindestens eines Federelementes 13, 213.

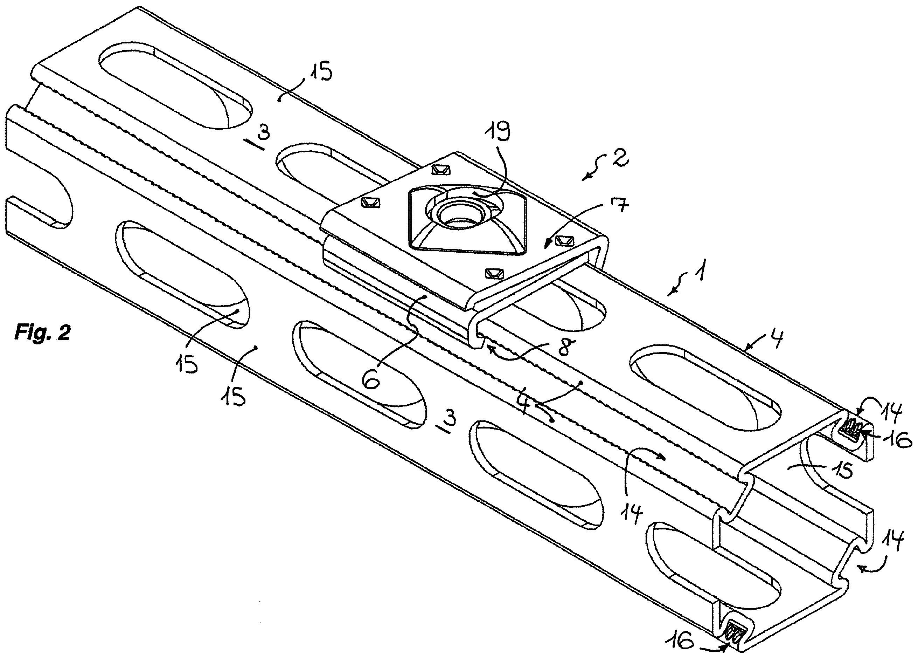

Bei der in den Figuren 1 bis 10 gezeigten Montage-Einheit sind die Klammerteile 6, 7 aus der Halteposition, in welcher die Klammerteile 6, 7 an den gegenüberliegenden Schienen-Längsrändern 4 einer der Schienen-Längsseiten 3 angreifen können, gegen die Kraft mindestens einen, hier auch als Rückstellelement dienenden Federelements 13 in eine quer zur Schienen-Längsrichtung auseinandergezogene und hier in den Figuren 2, 4 und 10 gezeigte Offen- oder Relativposition aneinander verschiebbar gehalten.

Da die wenigstens eine Halteklammer 2 der in den Figuren 1 bis 10 gezeigten Montage-Einheit aus konstruktiv vergleichsweise einfachen Bestandteilen besteht, ist diese Halteklammer 2 mit einem vergleichsweise geringen Aufwand herstellbar. Da die Klammerteile 6, 7 nur wenig in eine quer zur Schienen-Längsrichtung auseinandergezogene Offen- oder Relativposition aneinander verschoben werden müssen, damit diese Klammerteile 6, 7 sich mit ihren Klammer-Krallen 8 von den beidseits einer Schienen-Längsseite 3 angeordneten Schienen-Längsrändern 4 lösen können, und da sich die Klammerteile 6, 7 anschließend durch die Rückstellkraft des mindestens einen Federelements 13 in ihre Halteposition zurückbewegen, ist die Handhabung der Halteklammer 2 vergleichsweise einfach. Aufgrund der einfachen und stabilen Ausgestaltung ihrer Bestandteile zeichnet sich die wenigstens eine Halteklammer 2 der in den Figuren 1 bis 10 gezeigten Montage-Einheit auch durch eine hohe Belastbarkeit aus.

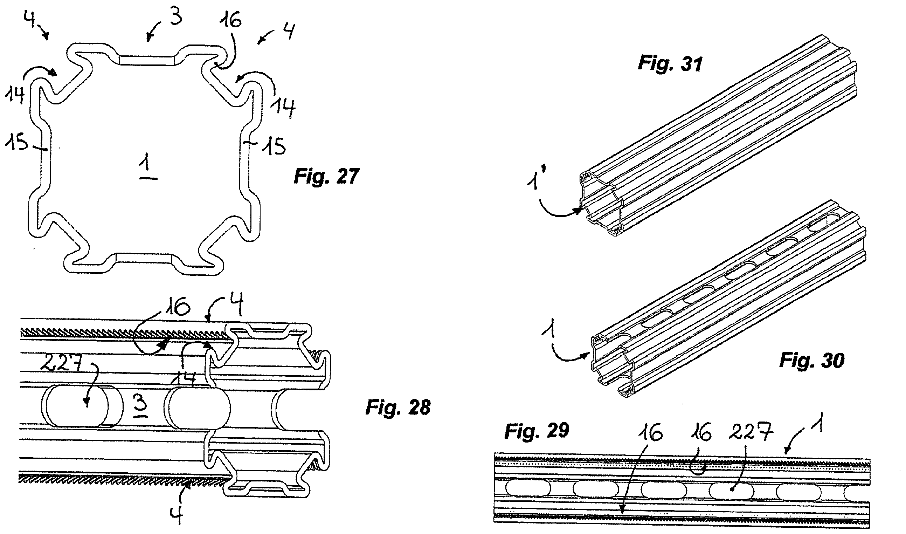

Wie aus einem Vergleich der Figuren 1 bis 4 und 8 bis 10 beziehungsweise der Figuren 11, 14, 17 bis 19, 27 bis 30, 33 und 36 deutlich wird, weisen die Montageschienen 1 der in den Figuren 1 bis 36 gezeigten Montage-Einheiten im Schienen-Querschnitt eine rechteckige und hier eine quadratische Außen-Querschnittskontur auf. Dabei ist in jedem Eckbereich der Montageschiene 1 eine Nut 14 vorgesehen, deren Nutöffnung durch die an den jeweiligen Schienen-Eckbereichen angrenzenden Schienen-Längsränder 4 begrenzt ist. Damit die Klammerteile 6, 7; 206, 207 mit ihren Klammer-Krallen 8, 208 besonders fest und sicher in die in den Schienen-Eckbereichen angeordneten Nuten 14 der Montageschiene 1 eingreifen können, sind diese Nuten 14 hier als Schwalbenschwanz-Nuten 14 ausgebildet. Die Montageschiene 1 kann - wie hier gezeigt - auch als Hohlprofil ausgebildet sein, das eine im Querschnitt umlaufende Profilwandung 15 aufweist; auch diese hier als Hohlprofil ausgebildete Montageschiene 1 zeichnet sich durch eine hohe Belastbarkeit aus. Die hier dargestellte Montageschiene 1 weist an ihren Schienen-Längsseiten 3 in vorzugsweise gleichmäßigen Abständen angeordnete Befestigungslöcher 227 auf, in welchen Befestigungslöchern weitere, hier nicht weiter gezeigte System-Bauteile dieser baukastenartig ausgebildeten Montage-Einheiten befestigt werden können. Aus einem Vergleich der Figuren 30 und 31 wird jedoch deutlich, dass die Montageschiene 1 auch ohne diese Befestigungslöcher (vgl. Fig. 31) ausgebildet sein kann, wenn die hier beschriebene Montage-Einheit über die Montageschiene 1 und die Halteklammern 2, 202 hinaus keine weiteren System-Bauteile benötigt.

Aus einem Vergleich der Figuren 1 bis 3 und 5 bis 8, 11, 28, 29 und 36 wird deutlich, dass an den Schienen-Längsrändern 4 der Montageschiene 1 sich in Schienen-Längsrichtung erstreckende Profilierungen 16 vorgesehen sind, die mit zumindest einer Rastnocke 17, 217 und hier mit zwei voneinander beabstandeten Rastnocken 17, 217 an der Klammer-Kralle 8, 208 der Klammerteile 6, 7; 206, 207 der Halteklammer 2, 202 zusammenwirken. Durch diese an den Schienen-Längsrändern 4 vorgesehenen und mit den Rastnocken 17, 217 an den Klammer-Krallen 8, 208 zusammenwirkenden Profilierungen 16 wird einem unbeabsichtigtem Verschieben der in ihrer Halteposition befindlichen Klammerteile 6, 7; 206, 207 in Schienen-Längsrichtung der Montageschiene 1 entgegengewirkt.

Die Ausformung 10, 210 an dem ersten Klammerteil 6, 206 und die Einformung 12, 212 an dem zweiten Klammerteil 7, 207 sind hier als formgleiche Ausprägungen dieser Klammerteile 6, 7; 206, 207 ausgebildet. Dabei weisen die Einformung 12, 212 und die Ausformung 10, 210 hier jeweils einen rautenförmigen Querschnitt auf, wobei die eine Diagonale dieses rautenförmigen Querschnitts der Ausformung 10, 210 beziehungsweise der Einformung 12, 212 in Schienen-Längsrichtung orientiert ist, während die andere Diagonale dieses rautenförmigen Querschnitts jeweils rechtwinklig zur Schienen-Längsrichtung angeordnet ist.

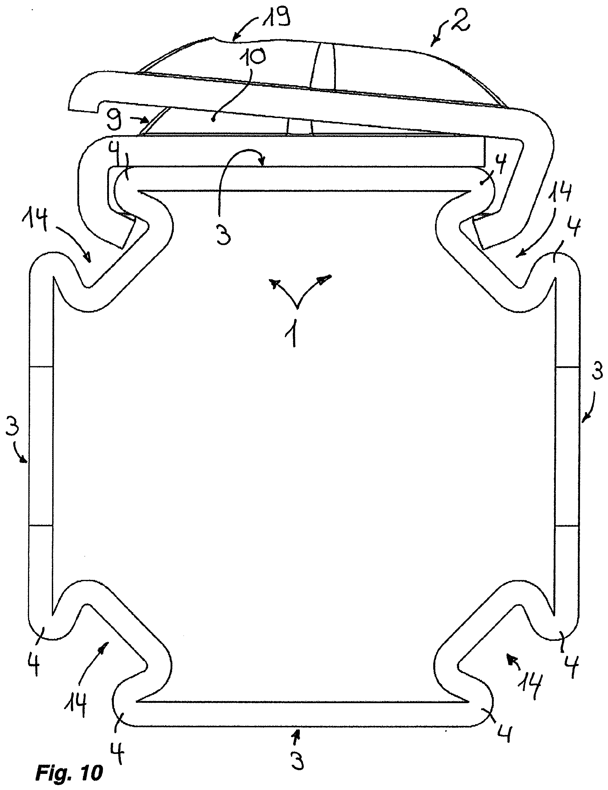

In den Figuren 10, 23 und 26 ist erkennbar, dass die, an dem an die zumindest eine Schienen-Längsseite 3 anlegbaren ersten Klammerteil 6 ausgebildete Ausformung 10, 210 in die der Montageschiene 1 abgewandte Richtung vorsteht.

Bei der Halteklammer 2 der in den Figuren 1 bis 10 gezeigten Montage-Einheit wird durch diese Ausformung 10 am ersten Klammerteil 6 das an der Auflaufschräge 9 der Ausformung 10 quer zur Schienen-Längsrichtung in die Offenposition verschobene zweite Klammerteil 7 auf seine der Klammer-Kralle 8 abgewandten Seite leicht angehoben, wodurch sich die Halteklammer 2 in dieser Offen- oder Relativposition entweder in Schienen-Längsrichtung leicht verschieben oder von der Montageschiene 1 auf einfache Weise lösen lässt.

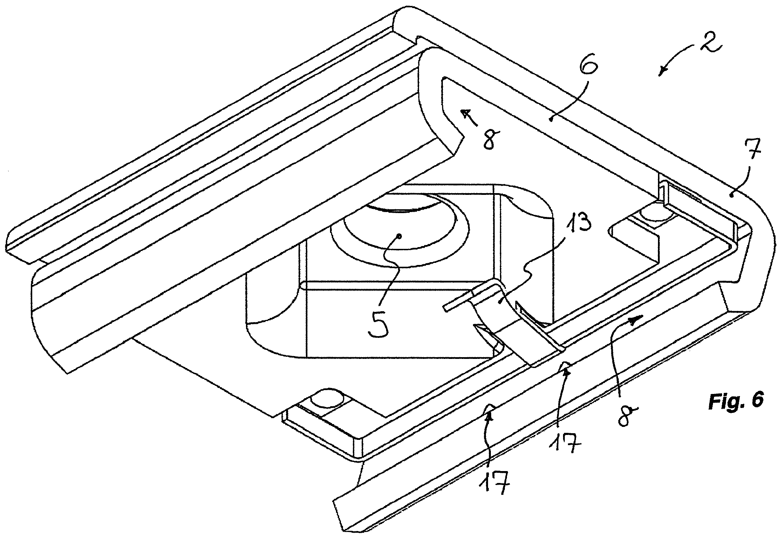

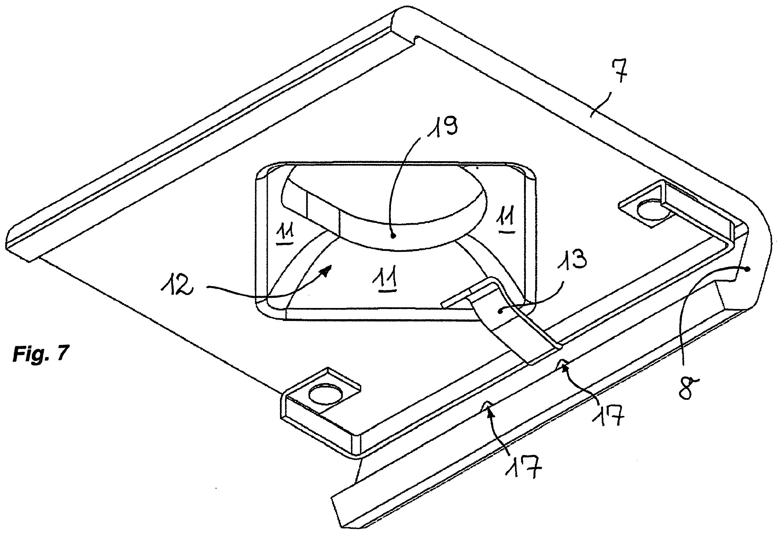

Aus einem Vergleich der Figuren 6 und 7 ist erkennbar, dass an dem zweiten Klammerteil 7 zumindest ein als Federbügel ausgebildetes Federelement 13 vorgesehen ist, das den benachbarten Randbereich des ersten Klammerteiles 6 untergreift. Dieser als Federelement 13 dienende Federbügel wirkt gleichzeitig auch aus Rückstellelement, wobei der als Federelement 13 dienende Federbügel dazu eine Schrägfläche am ersten Klammerteil 6 federnd beaufschlagt. Dabei bewirkt der die Schrägfläche beaufschlagende Federbügel eine Rückstellkraft in die Halteposition der Klammerteile 6, 7. Als Schrägfläche für das als Federbügel ausgebildete Federelement 13 sind dabei die die Ausprägung der Ausformung 10 rückseitig ausformenden Schrägflächen ausgebildet.

Um die Halteklammern 2, 202 der in den Figuren 1 bis 36 gezeigten Montage-Einheiten bei Bedarf in der gewünschten Halteposition an der Montageschiene 1 fest und unlösbar fixieren zu können, ist eine Spanneinrichtung vorgesehen. Diese Spanneinrichtung kann beispielsweise einen Gewindestab 18, 218 aufweisen, der am ersten Klammerteil 6, 206 vorsteht und der eine Durchstecköffnung 19, 219 am zweiten Klammerteil 7, 207 durchsetzt. Auf diesem Gewindestab 18, 218 ist eine Gewindemutter 20, 220 aufschraubbar, zwischen der und dem ersten Klammerteil 6, 206 das zweite Klammerteil 7, 207 einspannbar und in der Halteposition der Halteklammer 2, 202 fixierbar ist.

Bei der in den Figuren 1 bis 10 gezeigten Montage-Einheit beaufschlagt die Gewindemutter 20 die in ihre Richtung vorstehende Ausprägung der Einformung 12 des zweiten Klammerteils 7 mit Hilfe einer Unterlegscheibe 21, die auf ihrer dieser Ausprägung zugewandten Scheiben-Ringfläche kugelpfannenartig ausgeformt sein kann.

Die hier dargestellten Halteklammern 2, 202 können aber auch jede andere geeignete Spanneinrichtung aufweisen, welche die Klammerteile 6, 7; 206, 207 in der Halteposition gegeneinander zu pressen vermag. So kann die Spanneinrichtung beispielsweise durch eine Gewindeschraube gebildet sein, die in eine Schraubenöffnung 205 mit Innengewinde im ersten Klammerteil einschraubbar ist. Des Weiteren kann die Spanneinrichtung einen vom ersten Klammerteil 6, 206 getragenen Spannstab oder Spannzapfen haben, auf dem ein Spannelement sitzt, das eine Drehbewegung am Spannelement in eine Längsbewegung des Spannelements am Spannstab umsetzt.

Die Halteklammer 2 der in den Figuren 1 bis 10 gezeigten Montage-Einheit besteht hier aus dem der Montageschiene 1 zugewandten ersten Klammerteil 6 mit der rautenförmigen Ausprägung 10, einem oberen zweiten Klammerteil 7 mit einer ebenfalls rautenförmigen Einformung 12, sowie einem Federelement 13, welches diese beiden Klammerhälften oder Klammerteile 6, 7 aufeinander drückt. Die die Ausformung 10 begrenzenden Auflaufschrägen 9 und die die Einformung 12 begrenzenden Gegenschrägen 11 haben im Wesentlichen dieselbe geometrische Form. Hierdurch werden die beiden Klammerteile 6, 7 in ihrer Halteposition formschlüssig aufeinander positioniert. Bei der Montage wird die Halteklammer 2 auf die Montageschiene 1 aufgedrückt. Dabei hebt sich das obere Klammerteil 7 vom unteren Klammerteil 6 ab und verschiebt sich quer zur Schienen-Längsrichtung, bis die Klammer-Kralle 8 des zweiten Klammerteiles 7 den Hinterschnitt am benachbarten Schienen-Längsrand 4 überwunden hat. Das hier als Federbügel ausgebildete Federelement 13 drückt die beiden Klammerteile 6, 7 über die rautenförmigen Aus- und Einformungen 10, 11 wieder aufeinander und lässt die Halteklammer 2 an der Montageschiene 1 einschnappen. Die Halteklammer 2 ist somit vorfixiert und hält sich selbständig an der Montageschiene 1. Die als Verzahnung ausgebildete Profilierung 16 an den Schienen-Längsrändern 4 wirkt dabei mit den Rastnocken 17 an den Klammer-Krallen 8 der Klammerteile 6, 7 zusammen und dient somit als Rutschhemmung in Längsrichtung der Montageschiene 1. Durch das Anziehen der auf dem Gewindestab 18 befindlichen Gewindemutter 20 werden die beiden Klammerteile 6, 7 vollständig zusammengezogen und die Ausformung 10 liegt formschlüssig in der komplementär ausgebildeten Einformung 12 oder Aussparung. Die Halteklammer 2 wird dabei über die an den Klammer-Krallen 8 vorgesehenen Hinterschnitte fest an der Montageschiene 1 fixiert. Dabei kann der Gewindestab 18 der Spanneinrichtung in ein Innengewinde 5 am ersten Klammerteil 6 eingeschraubt oder mit dem ersten Klammerteil 6 unlösbar verbunden sein.

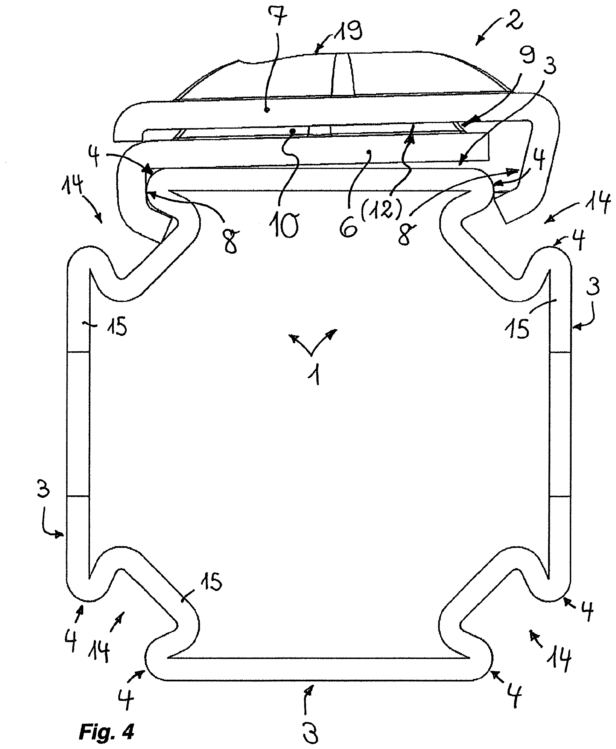

Aus einem Vergleich der Figuren 4, 5, 9 und 10 einerseits sowie der Figuren 6 und 7 andererseits ist erkennbar, dass das den Federbügel ausbildende Formteil derart geformt sein kann, dass sich an gegenüberliegenden Längsrändern des zweiten Klammerteiles 7 beidseits Führungsstege bilden. Diese Führungsstege können den Schiebeweg der Klammerteile 6, 7 in Richtung zur Halteposition begrenzen und/oder auch zur Längsführung dieser Klammerteile 6, 7 in Relation zueinander dienen. Während an der in den Figuren 6 und 7 dargestellten Halteklammer 2 das den Federbügel ausbildende Formteil derartige Führungsstege hat, sind an der in den Figuren 4, 5, 9 und 10 abgebildeten Halteklammer 2 solche Führungsstege nicht vorgesehen.

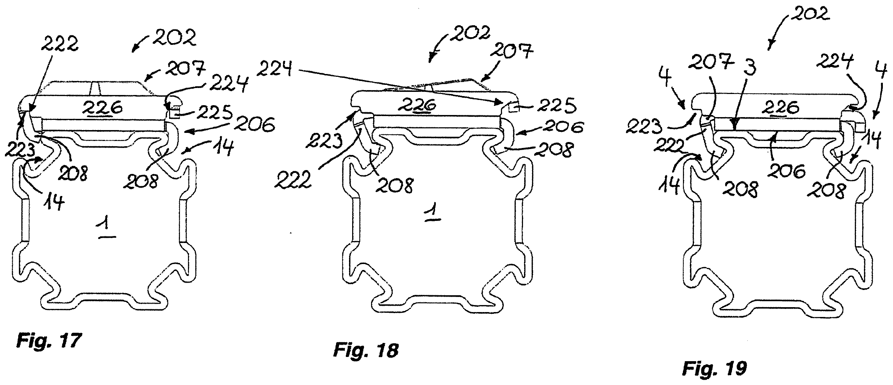

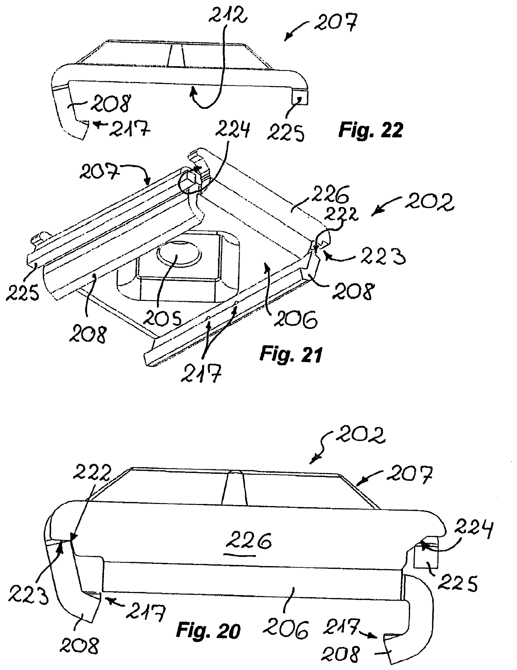

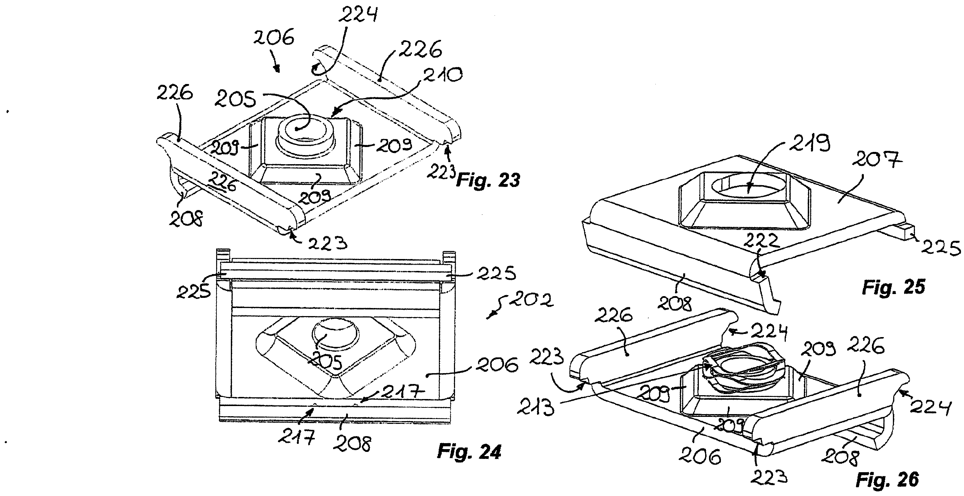

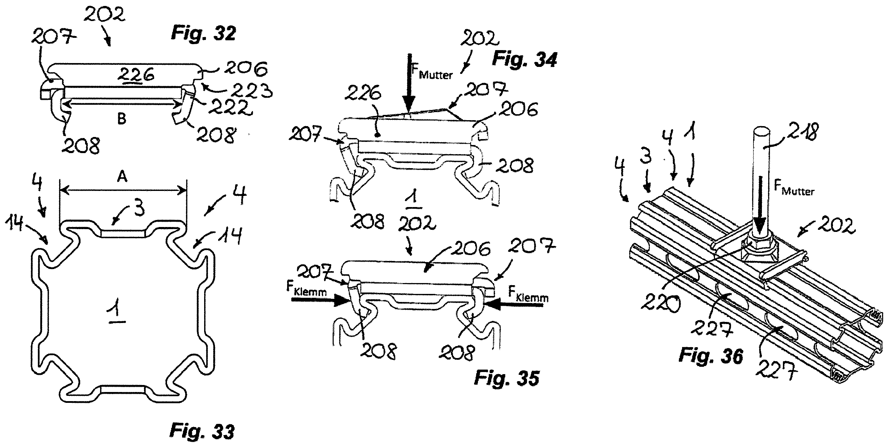

Die Halteklammer 202 in der in den Figuren 11 bis 36 gezeigten Montage-Einheit ist in den Figuren 17 und 20 in ihrer Offenposition gezeigt. Wie aus den Figuren 17 und 20 deutlich wird, greifen die Klammerteile 206, 207 in dieser Offenposition derart formschlüssig ineinander ein, dass diese Klammerteile 206, 207 in der Offenposition verbleiben. Durch Druckbeaufschlagung auf das zweite Klammerteil 207 in einer zum ersten Klammerteil 206 orientierten Kraftrichtung ist dieser Formschluss derart auflösbar, dass diese Klammerteile 206, 207 sich durch die Kraft des mindestens einen Federelements 213 in die Vormontageposition bewegen. Um den Formschluss der Klammerteile 206, 207 in der Offenposition zu bewirken, steht an dem zweiten Klammerteil 207 beidseits eine Haltenase 222 seitlich vor. Diese Haltenasen 222 sind in der Offenposition jeweils in einer zugeordneten Haltestufe 223 des ersten Klammerteiles 206 gehalten, welche Haltestufen 223 in die dem zweiten Klammerteil 207 abgewandte Richtung offen ausgebildet sind. Durch die erwähnte Druckbeaufschlagung des zweiten Klammerteiles 207 rückt die Haltenase 222 aus der zugeordneten Haltestufe 223 aus und die Klammerteile 206, 207 der in den Figuren 11 bis 36 gezeigten Montage-Einheit können sich derart verschieben und verschwenken, dass die Klammer-Krallen 208 einander annähern und ausreichend fest die, eine Schienen-Längsseite 3 begrenzenden Schienen-Längsränder 4 umgreifen. In dieser, in den Figuren 18 und 34 gezeigten Vormontageposition werden die Klammerteile 206, 207 durch das zumindest eine, als Druckfeder ausgebildete Federelement 213 auseinandergepresst, das zwischen den Klammerteilen 206, 207 vorgesehen ist. Aus Figur 26 wird deutlich, dass diese zumindest eine als Federelement 213 dienende Druckfeder als multigewellte Federscheibe ausgebildet ist, die zwischen den Klammerteilen 206, 207 nur wenig Platz benötigt. Durch die von der Druckfeder 213 erzeugte Kraft werden die Klammerteile 206, 207 derart auseinandergedrückt, dass die Klammerteile 206, 207 in der Vormontageposition leicht verschwenkt oder gekippt zueinander angeordnet sind. Während der Schwenk- oder Kippbewegung der Klammerteile 206, 207 von der in den Figuren 17 und 20 gezeigten Offenposition in die in den Figuren 18 und 34 dargestellte Vormontageposition werden die Klammerteile 206, 207 an einer Führungskulisse 224 geführt, die beidseits an dem ersten Klammerteil 206 vorgesehen ist. An diesen Führungskulissen 224 liegt jeweils ein zugeordneter Gleitzapfen 225 an, welche Gleitzapfen 225 am zweiten Klammerteil 208 seitlich vorstehen. Die Schiebe- und Schwenkbewegung der Klammerteile 206, 207 von der Offenposition in die Vormontageposition einerseits und zwischen der Vormontageposition und der in den Figuren 11 bis 14, 19, 21, 32 und 35 bis 36 gezeigten Halteposition andererseits wird noch dadurch begünstigt, dass das erste Klammerteil 206 längsseitig Führungswände 226 trägt, zwischen denen das zweite Klammerteil 208 verschieblich geführt ist. Diese Führungswände 226 sind durch die in Richtung zum zweiten Klammerteil 207 umgebogenen oder abgewinkelten längsseitigen Randbereiche des ersten Klammerteiles 206 geformt. Diese Führungswände 226 des ersten Klammerteiles 206 tragen an ihrem einen Stirnende die Haltestufe 223 und an ihrem gegenüberliegenden anderen Stirnende die Führungskulisse 224.

Durch die zwischen den Klammerteilen 206, 207 wirkende Spanneinrichtung, die auch bei der Halteklammer 202 durch einen Gewindestab 218 und eine Gewindemutter 220 gebildet sein kann, lassen sich die Klammerteile 206, 207 derart gegeneinander pressen, dass sich die Halteklammer 202 von der Vormontageposition in die Halteposition bewegt.

Die Halteklammer 202 besteht aus dem ersten, unteren Klammerteil 206 mit der rautenförmigen Ausprägung oder Ausformung 10 und dem zweiten, oberen Klammerteil 207 mit der ebenfalls rautenförmigen Einprägung oder Einformung 212 sowie dem als multigewellte Druck-Federscheibe ausgebildeten Federelement 213, welches die beiden Klammerteile 206, 207 auseinanderrückt und in der in Figur 17 und 20 gezeigten Offenposition hält. Da die die Ausformung 210 begrenzenden Auflaufschrägen 209 und die die Einformung 212 begrenzenden Gegenschrägen 211 dieselbe geometrische Form haben, werden die beiden Klammerteile 206, 207 formschlüssig aufeinander positioniert.

Zur Montage der Halteklammer 202 an der Montageschiene 1 wird die Halteklammer 202 an der Montageschiene 1 angesetzt. Hierbei wird die am ersten Klammerteil 206 vorgesehene Klammer-Kralle 208 schon in der ersten Schwalbenschwanz-Nut 14 der Montageschiene 1 positioniert. Durch manuellen Druck auf das zweite Klammerteil 207 schiebt sich deren Klammer-Kralle 208 gegen die Kraft des Federelements 213 über den benachbarten Schienen-Längsrand, um dann in der Vormontageposition einzuschnappen.

Bei einer optionalen Offen-Fixierung der Halteklammer 202 löst sich diese durch Druck auf das zweite Klammerteil 207 gegen die Kraft des Federelements 213 aus dem zwischen der Haltenase 222 und der Haltestufe 223 in Offenposition bewirkten Formschluss, so dass das zweite Klammerteil 207 anschließend sich über den benachbarten Schienen-Längsrand 3 schieben kann und auch die Klammer-Kralle 208 des zweiten Klammerteils 207 in der Schwalbenschwanz-Nut 14 der Montageschiene 1 einschnappt. In der in den Figuren 18 und 34 gezeigten Vormontageposition drückt das Federelement 213 das zweite Klammerteil 207 auf der einen Seite mit den Gleitzapfen 225 gegen die Führungskulissen 224 und auf der anderen Seite mit der Klammer-Kralle 208 des zweiten Klammerteiles 207 in die Nut 14 der Montageschiene 1. Die Halteklammer 202 ist somit in seiner Vormontageposition vorfixiert und hält selbständig und gegebenenfalls verschiebbar an der Montageschiene 1.

Die an den Klammer-Krallen 208 vorgesehenen Rastnocken 17 greifen dabei in die Profilierung 16 der Montageschiene 1 ein und verhindern ein unbeabsichtigtes Verrutschen in Längsrichtung der Montageschiene 1. Durch Verpressen der Klammerteile 206, 207 mittels der Spanneinrichtung werden die Klammerteile 206, 207 über die Aus- und Einformungen 210, 212 und deren Schrägflächen 209, 211 zusammengezogen. Die Halteklammer 202 wird hierbei über die Klammer-Krallen 208 und die an der Montageschiene 1 vorgesehenen Nuten 214 fest und unrückbar, aber dennoch leicht löslich fixiert. Das feste Verspannen der Klammerteile 206, 207 erfolgt auch bei der hier dargestellten Halteklammer 202 durch den Gewindestab 218 und die Gewindemutter 220 der Spanneinrichtung. Das feste Verspannen der Klammerteile 206, 207 kann aber auch mit anderen geeigneten Spanneinrichtungen erfolgen.

In der Offenposition wird der Schiebeweg des zweiten Klammerteiles 207 am ersten Klammerteil 206 entweder - wie hier - durch den die Durchstecköffnung 19 durchsetzenden Gewindestab 18 oder auch einen Anschlag begrenzt, der an der zumindest einen Führungskulisse 224 angeordnet sein kann.

Auch die Halteklammer 202 der in den Figuren 11 bis 36 gezeigten Montage-Einheit kann aus wenigen belastbaren Bestandteilen hergestellt sein, wobei auch die Halteklammer 202 mit vergleichsweise geringem Aufwand herstellbar ist. Auch die in den Figuren 11 bis 36 gezeigte Montageeinheit zeichnet sich durch eine vergleichsweise einfache Handhabung aus.

Es ist eine Besonderheit der in den Figuren 1 bis 36 gezeigten Montage-Einheiten, dass die Klammerteile 6, 7; 206, 207 der Halteklammern 2, 202 über den erzeugten Formschluss der an den Klammerteilen 6, 7; 206, 207 vorgesehenen und miteinander korrespondierenden Geometrien, nämlich der Ausformung 10, 210 und der Einformung 12, 212 oder Aussparung, an der Montageschiene 1 gespannt werden. Wie in den Figuren 32 bis 36 beispielhaft gezeigt ist, wird die Klemmkraft F_{Klemm} der Halteklammern 2, 202 durch einen Versatz der an den Klammerteilen 6, 7; 206, 207 vorgesehenen rautenförmigen Geometrien zueinander erzeugt (Maß B < A in vollständig heruntergespanntem Zustand). Erst beim Anziehen der Spanneinrichtung und Festziehen der Gewindemutter 20, 220 entsteht die Kraft F_{Mutter}, welche das zweite Klammerteil 7, 207 gegen das erste Klammerteil 6, 206 verspannt und die Klemmkraft F_{Klemm} quer zur Schienen-Längsrichtung erzeugt. Durch den Formschluss dieser rautenförmigen Geometrien an den Klammerteilen 6, 7; 206, 207 lassen sich diese Klammerteile in ihrer gegeneinander verspannten Halteposition nicht mehr gegeneinander verdrehen.

Anhand der Figuren 17 bis 19 ist die Handhabung der in den Figuren 11 bis 36 gezeigten Montage-Einheit gezeigt. So wird in Figur 17 die in ihrer Offenstellung befindliche Halteklammer 202 auf eine der Schienen-Längsseiten 3 der Montageschiene 1 aufgesetzt. In Figur 17 wird deutlich, dass die in ihrer Offenposition befindliche Halteklammer 202 durch ihre Kontur beim Ansetzen an der Montageschiene 202 sehr einfach den korrekten definierten Sitz findet.

In Figur 18 ist veranschaulicht, wie durch einfachen Druck auf das obere zweite Klammerteil 207 in Richtung zur Montageschiene 202 das obere Klammerteil 207 an der Montageschiene 1 einschnappt. Dabei spannt die Halteklammer 202 durch das Federelement 213 selbständig an der Montageschiene 202.

Ein Öffnen der Klammerteile 206, 207 und ein Lösen der Halteklammer 202 geschieht durch Drücken auf die der Klammer-Kralle 208 des zweiten Klammerteiles 207 abgewandte Querseite. Hierbei schnappt die Halteklammer 202 wieder in der Offenstellung und somit im Auslieferungszustand ein.

Aus einem Vergleich der Figuren 19 und 36 wird deutlich, wie die Halteklammer 202 in der gewünschten Halteposition an der Montageschiene 1 fixiert werden kann. Dazu wird die auf den Gewindestab 218 befindliche Gewindemutter 220 in Richtung zum zweiten Klammerteil 208 festgezogen und die Klammerteile 206, 207 fest verschlossen. Hierbei schieben sich die jeweils als Rauten-Kontur ausgestaltete Ausformung 210 und Einformung 212 übereinander und spannen die Halteklammer 202 fest an der Montageschiene 1.

### / Bezugszeichenliste

### Bezugszeichenliste

- 1: Montageschiene
- 2: Halteklammer (der Montage-Einheit gemäß den Figuren 1 bis 10)
- 3: Schienen-Längsseite
- 4: Schienen-Längsrand
- 5: Innengewinde (an der Halteklammer 2)
- 6: erstes Klammerteil (der Halteklammer 2)
- 7: zweites Klammerteil (der Halteklammer 2)
- 8: Klammer-Kralle (an der Halteklammer 2)
- 9: Auflaufschräge (an der Halteklammer 2)
- 10: Ausformung (an der Halteklammer 2)
- 11: Gegenschräge (an der Halteklammer 2)
- 12: Einformung (an der Halteklammer 2)
- 13: Federelement (der Halteklammer 2)
- 14: (Schwalbenschwanz-)Nut
- 15: Profilwandung
- 16: Profilierung
- 17: Rastnocke (an den Klammerteilen 6, 7 der Halteklammer 2)
- 18: Gewindestab (an der Halteklammer 2)
- 19: Durchstecköffnung (am zweiten Klammerteil 7 der Halteklammer 2)
- 20: Gewindemutter
- 21: Unterlegscheibe
- 202: Halteklammer (der in den Figuren 11 bis 36 gezeigten Montage-Einheit)
- 205: Innengewinde (der Halteklammer 202)
- 206: erstes Klammerteil (der Halteklammer 202)
- 207: zweites Klammerteil (der Halteklammer 202)
- 208: Klammer-Kralle (an den Klammerteilen 206, 207 der Halteklammer 202)
- 209: Auflaufschräge (an der Halteklammer 202)
- 210: Ausformung (an der Halteklammer 202)
- 211: Gegenschräge (an der Halteklammer 202)
- 212: Einformung (an der Halteklammer 202)
- 213: Federelement (der Halteklammer 202)
- 217: Rastnocke (an den Klammer-Krallen 208 der Halteklammer 202)
- 218: Gewindestab
- 219: Durchstecköffnung
- 220: Gewindemutter
- 222: Haltenase
- 223: Haltestufe
- 224: Führungskulisse
- 225: Gleitzapfen
- 226: Führungswände
- 227: Befestigungslöcher

## Patentansprüche

1. Montage-Einheit mit zumindest einer Montageschiene (1), an der wenigstens eine Halteklammer (2, 202) lösbar fixierbar ist, wobei die wenigstens eine Halteklammer (2, 202) an den zumindest eine Schienen-Längsseite (3) begrenzenden Schienen-Längsrändern (4) angreift und dazu zwei Klammerteile (6, 7; 206 207) hat, die jeweils mindestens eine, einen benachbarten Schienen-Längsrand (4) der die Schienen-Längsseite (3) begrenzenden Schienen-Längsränder (4) hintergreifende Klammer-Kralle (8, 208) aufweisen, und von denen ein, den einen Schienen-Längsrand (4) hintergreifendes erstes Klammerteil (6, 206) wenigstens eine, von mindestens einer Auflaufschräge (9, 209) begrenzte Ausformung (10, 210) und ein, den anderen Schienen-Längsrand (4) hintergreifendes zweites Klammerteil (7, 207) zumindest eine, von wenigstens einer Gegenschräge (11, 211) begrenzte Einformung (12, 212) oder Aussparung tragen, wobei die Ausformung (10, 210) und die Einformung (12, 212) oder Aussparung der einander anliegenden Klammerteile (6, 7; 206, 207) in der Halteposition der Halteklammer (2, 202) formschlüssig aufeinander positioniert sind, wobei das erste und das zweite Klammerteil (6, 7; 206, 207) zwischen einer Halte- und Vormontageposition, in welcher die Schienen-Längsränder (4) mittels der einander angenäherten Klammer-Krallen (8, 208) hintergreifbar sind, und einer Offenposition relativ zueinander verschiebbar und/oder verschwenkbar sind, in welcher Offenposition die Klammer-Krallen (8, 208) demgegenüber auf Abstand gebracht sind, und wobei die Schiebe- und/oder Schwenkbewegung der Klammerteile (6, 7; 206, 207) der wenigstens einen Halteklammer (2, 202) von der Halte- oder Vormontageposition in die Offenposition oder umgekehrt gegen die Kraft mindestens eines Federelements (13, 213) erfolgt.

2. Montage-Einheit nach Anspruch 1, **dadurch gekennzeichnet, dass** die Ausformung (10, 210) und die Einformung (12, 212) oder Aussparung jeweils einen runden, quadratischen oder rautenförmigen Querschnitt aufweisen.

3. Montage-Einheit nach Anspruch 1 oder 2, **dadurch gekennzeichnet, dass** an dem an die zumindest eine Schienen-Längsseite (3) anliegenden ersten Klammerteil (6, 206) die Ausformung (10, 210) vorgesehen ist, die in die dem zweiten Klammerteil (7, 207) zugewandte Richtung vorsteht.

4. Montage-Einheit nach einem der Ansprüche 1 bis 3, **dadurch gekennzeichnet, dass** die am ersten Klammerteil (6, 206) vorgesehene Ausformung (10, 210) und die am zweiten Klammerteil (7, 207) vorgesehene Einformung (12, 212) jeweils als vorzugsweise formgleiche Ausprägung dieser Klammerteile (6, 7; 206, 207) ausgebildet sind.

5. Montage-Einheit nach einem der Ansprüche 1 bis 4, **dadurch gekennzeichnet, dass** die Montageschiene (1) im Schienen-Querschnitt eine rechteckige und vorzugsweise eine quadratische Außen-Querschnittskontur aufweist.

6. Montage-Einheit nach einem der Ansprüche 1 bis 5, **dadurch gekennzeichnet, dass** die Montageschiene (1) in jedem ihrer Eckbereiche eine Nut (14) aufweist, deren Nutöffnung durch die an den jeweiligen Schienen-Eckbereich angrenzenden Schienen-Längsränder (4) begrenzt ist.

7. Montage-Einheit nach Anspruch 6, **dadurch gekennzeichnet, dass** die in den Schienen-Eckbereichen angeordneten Nuten (14) als Schwalbenschwanz-Nuten (14) ausgebildet sind.

8. Montage-Einheit nach einem der Ansprüche 1 bis 7, **dadurch gekennzeichnet, dass** die Montageschiene (1) als Hohlprofil ausgebildet ist, das eine im Querschnitt umlaufende Profilwandung (15) aufweist.

9. Montage-Einheit nach einem der Ansprüche 1 bis 8, **dadurch gekennzeichnet, dass** die Diagonalen des quadratischen oder rautenförmigen Querschnitts der Ausformung (10, 210) und der Einformung (12, 212) oder Aussparung in Schienen-Längsrichtung beziehungsweise rechtwinklig zur Schienen-Längsrichtung orientiert sind.

10. Montage-Einheit nach einem der Ansprüche 1 bis 9, **dadurch gekennzeichnet, dass** an zumindest einem Schienen-Längsrand (4) der eine Schienen-Längsseite (3) begrenzenden Schienen-Längsränder (4) eine sich in Schienen-Längsrichtung (3) erstreckende Profilierung (16) vorgesehen ist, die zumindest mit einer Rastnocke (17, 217) oder einer Gegenprofilierung an der mindestens einen Klammer-Kralle (8, 208) wenigstens eines der Klammerteile (6, 7; 206, 207) der Halteklammer (2, 202) zusammenwirkt.

11. Montage-Einheit nach einem der Ansprüche 1 bis 10, **dadurch gekennzeichnet, dass** die Klammerteile (6, 7; 206, 207) mittels einer Spanneinrichtung in ihrer Halteposition aneinander fixierbar sind.

12. Montage-Einheit nach Anspruch 11, **dadurch gekennzeichnet, dass** das erste Klammerteil (6, 206) einen Gewindestab (18, 218) oder Spannzapfen der Spanneinrichtung trägt, der eine Durchstecköffnung (19, 219) am zweiten Klammerteil (8, 208) durchsetzt und dass die Spanneinrichtung eine Gewindemutter (20, 220) oder ein Spannelement aufweist, das eine auf die Gewindemutter (20, 220) oder das Spannelement ausgeübte Drehbewegung in eine Längsbewegung der Gewindemutter (20, 220) oder des Spannelements am Gewindestab (18, 218) oder am Spannzapfen umsetzt.

13. Montage-Einheit nach Anspruch 12, **dadurch gekennzeichnet, dass** die Durchstecköffnung (19, 219) am zweiten Klammerteil (7, 207) als ein quer zur Schienen-Längsrichtung orientiertes Langloch ausgebildet ist.

14. Montage-Einheit nach einem der Ansprüche 1 bis 13, **dadurch gekennzeichnet, dass** die Klammerteile (6, 7) der wenigstens einen Halteklammer (2) aus der Halteposition gegen die Rückstellkraft des mindestens einen Federelements (13) in die Offenposition verschiebbar sind.

15. Montage-Einheit nach einem der Ansprüche 1 bis 14, **dadurch gekennzeichnet, dass** der Abstand zwischen den, an den Klammerteilen (6, 7) der wenigstens einen Halteklammer (2) vorgesehenen Klammer-Krallen (8) von der Halteposition durch Aufdrücken der wenigstens einen Halteklammer (2) auf die Montageschiene (1) in die Offenposition aufweitbar ist und/oder dass die Klammerteile (6, 7) sich aus der Offenposition durch die Rückstellkraft des mindestens einen Federelements (13) in die Halteposition zurückbewegen.

16. Montage-Einheit nach einem der Ansprüche 1 bis 15, **dadurch gekennzeichnet, dass** an dem zweiten Klammerteil (7) zumindest ein Federbügel als Federelement (13) vorgesehen ist, der den benachbarten Randbereich des ersten Klammerteiles (6) untergreift.

17. Montage-Einheit nach Anspruch 16, **dadurch gekennzeichnet, dass** der als Federelement (13) dienende Federbügel eine Schrägfläche am ersten Klammerteil (6) federnd beaufschlagt, und dass der die Schrägfläche beaufschlagende Federbügel eine Rückstellkraft in die Halteposition der Klammerteile (6, 7) bewirkt.

18. Montage-Einheit nach Anspruch 16 oder 17, **dadurch gekennzeichnet, dass** die die Ausprägung am ersten Klammerteil (6) rückseitig ausformende(n) Schrägfläche(n) bereichsweise als Schrägfläche für den Federbügel ausgebildet ist/sind.

19. Montage-Einheit nach einem der Ansprüche 1 bis 13, **dadurch gekennzeichnet, dass** die Klammerteile (206, 207) der wenigstens einen Halteklammer (202) in der Offenposition formschlüssig derart ineinandergreifen, dass diese Klammerteile (206, 207) in der Offenposition verbleiben, und/oder dass der Formschluss der Klammerteile (206, 207) in Offenposition durch Druckbeaufschlagung des zweiten Klammerteiles (207) in eine zum ersten Klammerteil (206) orientierte Kraftrichtung derart auflösbar ist, dass diese Klammerteile (206, 207) sich durch die Kraft des mindestens einen Federelements (213) in die Halte- oder Vormontageposition bewegen.

20. Montage-Einheit nach einem der Ansprüche 1 bis 13 oder 19, **dadurch gekennzeichnet, dass** das Federelement (213) als zumindest eine zwischen dem ersten und dem zweiten Klammerteil (206, 207) angeordnete Druckfeder und insbesondere als multigewellte Federscheibe ausgebildet ist.

21. Montage-Einheit nach einem der Ansprüche 1 bis 13 oder 19 bis 20, **dadurch gekennzeichnet, dass** an dem zweiten Klammerteil (207) vorzugsweise beidseits zumindest eine Haltenase (222) seitlich vorsteht, die in der Offenposition in einer zugeordneten Haltestufe (223) des ersten Klammerteils (206) gehalten ist, welche Haltestufe(n) (223) in die dem zweiten Klammerteil (207) abgewandte Richtung offen ausgebildet ist.

22. Montage-Einheit nach einem der Ansprüche 1 bis 13 oder 19 bis 21, **dadurch gekennzeichnet, dass** an dem ersten Klammerteil (206) vorzugsweise beidseits eine Führungskulisse (224) vorgesehen ist, an welcher/welchen Führungskulisse(n) (224) ein zugeordneter Gleitzapfen (225) anliegt, welche(r) Gleitzapfen (225) am zweiten Klammerteil (207) seitlich vorsteht.

23. Montage-Einheit nach Anspruch 22, **dadurch gekennzeichnet, dass** die an zumindest einer Längsseite des zweiten Klammerteiles (207) vorgesehene Haltenase(n) (222) einerseits und Gleitzapfen (225) andererseits voneinander beabstandet sind.

24. Montage-Einheit nach einem der Ansprüche 1 bis 13 oder 19 bis 23, **dadurch gekennzeichnet, dass** das erste Klammerteil (206) längsseitig Führungswände (226) trägt, zwischen denen das zweite Klammerteil (207) verschieblich geführt ist.

25. Montage-Einheit nach Anspruch 24, **dadurch gekennzeichnet, dass** die Führungswände (226) des ersten Klammerteiles (206) jeweils einerseits die Haltestufe (223) und andererseits die Führungskulisse (224) tragen.

## Claims

1. Assembly unit having at least one assembly rail (1), on which at least one retaining clamp (2, 202) can be fixed in a releasable manner, wherein the at least one retaining clamp (2, 202) acts on the longitudinal rail edges (4), which delimit at least one longitudinal rail side (3), and, for this purpose, the at least one retaining clamp has two clamp parts (6, 7; 206, 207) which each have at least one clamp claw (8, 208), which engages behind an adjacent longitudinal rail edge (4) of the longitudinal rail edges (4), which bound the longitudinal rail side (3), and of which a first clamp part (6, 206), which engages behind the one longitudinal rail edge (4), bears at least one convexity (10, 210), which is delimited by at least one run-on slope (9, 209), and a second clamp part (7, 207), which engages behind the other longitudinal rail edge (4), bears at least one concavity (12, 212) or aperture, which is delimited by at least one mating slope (11, 211), wherein, in the retaining position of the retaining clamp (2, 202), the convexity (10, 210) and the concavity (12, 212) or aperture of the abutting clamp parts (6, 7;, 206, 207) are positioned in a form-fitting manner on one another, wherein the first and the second clamp parts (6, 7; 206, 207) can be displaced and/or pivoted relative to one another between a retaining and pre-assembly position, in which the close-together clamp claws (8, 208) can engage behind the longitudinal rail edges (4), and an open position, in which the clamp claws (8, 208), in contrast, have been moved a distance apart, and wherein the displacement and/or pivoting movement of the clamp parts (6, 7; 206, 207) of the at least one retaining clamp (2, 202) from the retaining or pre-assembly position into the open position, or vice versa, takes place counter to the force of at least one spring element (13, 213).

2. Assembly unit according to Claim 1, **characterized in that** the convexity (10, 210) and the concavity (12, 212) or aperture each have a round, square or diamond-shaped cross section.

3. Assembly unit according to Claim 1 or 2, **characterized by** the provision, on the first clamp part (6, 206), which butts against the at least one longitudinal rail side (3), of the convexity (10, 210), which projects in the direction oriented towards the second clamp part (7, 207).

4. Assembly unit according to one of Claims 1 to 3, **characterized in that** the convexity (10, 210), which is provided on the first clamp part (6, 206), and the concavity (12, 212), which is provided on the second clamp part (7, 207), are each designed in the form of a preferably same-shape stamped structure of these clamp parts (6, 7; 206, 207).

5. Assembly unit according to one of Claims 1 to 4, **characterized in that**, in cross section, the assembly rail (1) has a rectangular, and preferably a square, outer cross-sectional contour.

6. Assembly unit according to one of Claims 1 to 5, **characterized in that**, in each of its corner regions, the assembly rail (1) has a groove (14), of which the groove opening is delimited by the longitudinal rail edges (4), which adjoin the respective rail-corner region.

7. Assembly unit according to Claim 6, **characterized in that** the grooves (14), which are arranged in the rail-corner regions, are designed in the form of dovetail grooves (14).

8. Assembly unit according to one of Claims 1 to 7, **characterized in that** the assembly rail (1) is designed in the form of a hollow profile which, in cross section, has a surrounding profile wall (15).

9. Assembly unit according to one of Claims 1 to 8, **characterized in that** the diagonals of the square or diamond-shaped cross section of the convexity (10, 210) and of the concavity (12, 212) or aperture are oriented in the longitudinal direction of the rail and at right angles to the longitudinal direction of the rail.

10. Assembly unit according to one of Claims 1 to 9, **characterized by** the provision, on at least one longitudinal rail edge (4) of the longitudinal rail edges (4), which delimit a longitudinal rail side (3), of a profiling (16), which extends in the longitudinal rail direction (3) and interacts at least with a latching protuberance (17, 217) or a mating profiling on the at least one clamp claw (8, 208) of at least one of the clamp parts (6, 7; 206, 207) of the retaining clamp (2, 202).

11. Assembly unit according to one of Claims 1 to 10, **characterized in that** the clamp parts (6, 7; 206, 207) can be fixed in their retaining position on one another by means of a bracing device.

12. Assembly unit according to Claim 11, **characterized in that** the first clamp part (6, 206) bears a threaded rod (18, 218) or bracing pin of the bracing device, the rod or pin passing through an insertion opening (19, 219) on the second clamp part (8, 208), and **in that** the bracing device has a threaded nut (20, 220) or a bracing element, by means of which a rotary movement to which the threaded nut (20, 220) or the bracing element is subjected is converted into a longitudinal movement of the threaded nut (20, 220) or of the bracing element on the threaded rod (18, 218) or on the bracing pin.

13. Assembly unit according to Claim 12, **characterized in that** the insertion opening (19, 219) on the second clamp part (7, 207) is designed in the form of a slot which is oriented transversely in relation to the longitudinal direction of the rail.

14. Assembly unit according to one of Claims 1 to 13, **characterized in that** the clamp parts (6, 7) of the at least one retaining clamp (2) can be displaced out of the retaining position into the open position counter to the restoring force of the at least one spring element (13).

15. Assembly unit according to one of Claims 1 to 14, **characterized in that** the distance between the clamp claws (8), which are provided on the clamp parts (6, 7) of the at least one retaining clamp (2), can be widened from the retaining position into the open position by virtue of the at least one retaining clamp (2) being pushed onto the assembly rail (1), and/or **in that** the clamp parts (6, 7) move back out of the open position into the retaining position under the restoring force of the at least one spring element (13).

16. Assembly unit according to one of Claims 1 to 15, **characterized by** the provision, on the second clamp part (7), of at least one spring clip, forming the spring element (13), which engages beneath the adjacent edge region of the first clamp part (6).

17. Assembly unit according to Claim 16, **characterized in that** the spring clip, serving as spring element (13), acts resiliently on a sloping surface on the first clamp part (6), and **in that** the spring clip, which acts on the sloping surface, provides a restoring force into the retaining position of the clamp parts (6, 7).

18. Assembly unit according to Claim 16 or 17, **characterized in that** the sloping surface(s), which form(s) the stamped structure on the rear side of the first clamp part (6), is/are designed, in certain regions, in the form of a sloping surface for the spring clip.

19. Assembly unit according to one of Claims 1 to 13, **characterized in that**, in the open position, the clamp parts (206, 207) of the at least one retaining clamp (202) engage one inside the other in a form-fitting manner such that these clamp parts (206, 207) remain in the open position, and/or **in that** the form fit of the clamp parts (206, 207) in the open position can be disengaged by the second clamp part (207) being forced in a force direction oriented towards the first clamp part (206) such that these clamp parts (206, 207) move into the retaining or pre-assembly position under the force of the at least one spring element (213).

20. Assembly unit according to one of Claims 1 to 13 or 19, **characterized in that** the spring element (213) is designed in the form of at least one compression spring, which is arranged between the first and the second clamp parts (206, 207), and, in particular, in the form of a multi-wave spring washer.

21. Assembly unit according to one of Claims 1 to 13 or 19 to 20, **characterized in that** at least one retaining nose (222) projects laterally, preferably on both sides, on the second clamp part (207) and, in the open position, this retaining nose is retained in an associated retaining step (223) of the first clamp part (206), which retaining step(s) (223) is open in the direction oriented away from the second clamp part (207).

22. Assembly unit according to one of Claims 1 to 13 or 19 to 21, **characterized by** the provision, on the first clamp part (206), preferably on both sides thereof, of a guide track (224), against which butts an associated sliding pin (225), which projects laterally on the second clamp part (207).

23. Assembly unit according to Claim 22, **characterized in that**, on the one hand, the retaining nose(s) (222) provided on at least one longitudinal side of the second clamp part (207), and, on the other hand, sliding pin(s) (225) are spaced apart from one another.

24. Assembly unit according to one of Claims 1 to 13 or 19 to 23, **characterized in that**, on its longitudinal sides, the first clamp part (206) bears guide walls (226), between which the second clamp part (207) is guided in a displaceable manner.

25. Assembly unit according to Claim 24, **characterized in that** the guide walls (226) of the first clamp part (206) each bear, at one end, the retaining step (223) and, at the other end, the guide track (224).

## Revendications

1. Unité de montage pourvue d'au moins un rail de montage (1) sur lequel au moins une pince de retenue (2, 202) peut être fixée de façon détachable, dans laquelle l'au moins une pince de retenue (2, 202) s'accroche sur les bords longitudinaux de rail (4) délimitant un côté longitudinal de rail (3) et a pour cela deux pièces de pince (6, 7 ; 206, 207) qui présentent chacune au moins une griffe de pince (8, 208) agrippant par derrière un bord longitudinal de rail (4) contigu parmi les bords longitudinaux de rail (4) délimitant le côté longitudinal de rail (3), et parmi lesquelles une première pièce de pince (6, 206) agrippant par derrière le bord longitudinal de rail (4) porte au moins une formation en relief (10, 210) délimitée par au moins une plan incliné de sortie (9, 209) et une deuxième pièce de pince (7, 207) agrippant par derrière l'autre bord longitudinal de rail (4) porte au moins une formation en creux (12, 212) ou cavité délimitée par au moins un plan incliné homologue (11, 211), dans laquelle la formation en relief (10, 210) et la formation en creux (12, 212) ou cavité des pièces de pince (6, 7 ; 206, 207) appliquées l'une contre l'autre sont emboitées l'une sur l'autre lorsque la pince de retenue (2, 202) est en position de retenue, dans laquelle la première et la deuxième pièce de pince (6, 7 ; 206, 207) peuvent coulisser et/ou pivoter entre une position de retenue et de prémontage dans laquelle les bords longitudinaux de rail (4) peuvent être agrippés par derrière au moyen des griffes de pince (8, 208) rapprochées l'une de l'autre et une position d'ouverture dans laquelle les griffes de pince (8, 208) sont au contraires espacées, et dans laquelle le mouvement de coulissement et/ou de basculement des pièces de pince (6, 7 ; 206, 207) de l'au moins une pince de retenue (2, 202) de la position de retenue ou de prémontage à la position d'ouverture et réciproquement se fait contre la force au moins d'un élément de ressort (13, 213).

2. Unité de montage selon la revendication 1, **caractérisée en ce que** la formation en relief (10, 210) et la formation en creux (12, 212) ou cavité présentent chacune une section transversale ronde, carrée ou en forme de losange.

3. Unité de montage selon la revendication 1 ou 2, **caractérisée en ce que** sur la première pièce de pince (6, 206) appliquée contre l'au moins un côté longitudinal de rail (3) est prévue la formation en relief (10, 210) qui fait saillie dans la direction orientée vers la deuxième pièce de pince (7, 207).

4. Unité de montage selon une des revendications 1 à 3, **caractérisée en ce que** la formation en relief (10, 210) prévue sur la première pièce de pince (6, 206) et la formation en creux (12, 212) prévue sur la deuxième pièce de pince (7, 207) sont configurées chacune comme une empreinte de préférence de même forme de ces pièces de pince (6, 7 ; 206, 207).

5. Unité de montage selon une des revendications 1 à 4, **caractérisée en ce que** le rail de montage (1) présente dans la section transversale de rail un contour de section transversale extérieur rectangulaire et de préférence carré.

6. Unité de montage selon une des revendications 1 à 5, **caractérisée en ce que** le rail de montage (1) présente dans chacune de ses zones d'angle une rainure (14) dont l'ouverture de rainure est limitée par les bords longitudinaux de rail (4) contigus à la zone d'angle de rail respective.

7. Unité de montage selon la revendication 6, **caractérisée en ce que** les rainures (14) disposées dans les zones d'angle de rail sont configurées comme des rainures en queue d'aronde (14).

8. Unité de montage selon une des revendications 1 à 7, **caractérisée en ce que** le rail de montage (1) est configuré comme un profilé creux qui présente une paroi de profilée (15) de section transversale circulaire.

9. Unité de montage selon une des revendications 1 à 8, **caractérisée en ce que** les diagonales de la section transversale carrée ou en forme de losange de la formation en relief (10, 210) et de la formation en creux (12, 212) ou cavité sont orientées dans la direction longitudinale du rail ou perpendiculairement à la direction perpendiculaire du rail.

10. Unité de montage selon une des revendications 1 à 9, **caractérisée en ce que** sur au moins un bord longitudinal de rail (4) des bords longitudinaux de rail (4) délimitant le côté longitudinal de rail (3) est prévu un profilage (16) s'étendant dans la direction longitudinale de rail (3) qui interagit avec une came d'encliquetage (17, 217) ou un contre-profilage sur l'au moins une griffe de pince (8, 208) au moins d'une des pièces de pince (6, 7 ; 206, 207) de la pince de retenue (2, 202).

11. Unité de montage selon une des revendications 1 à 10, **caractérisée en ce que** les pièces de pince (6, 7 ; 206, 207) peuvent être fixées l'une contre l'autre au moyen d'un dispositif de serrage dans leur position de retenue.

12. Unité de montage selon la revendication 11, **caractérisée en ce que** la première pièce de pince (6, 206) porte une tige filetée (18, 218) ou un tenon de serrage du dispositif de serrage qui traverse une ouverture de passage (19, 219) sur la deuxième pièce de pièce de pince (8, 208) et que le dispositif de serrage comporte un écrou fileté (20, 220) ou un élément de serrage qui convertit un mouvement de rotation exercé sur l'écrou fileté (20, 220) ou l'élément de serrage en un mouvement longitudinal de l'écrou fileté (20, 220) ou de l'élément de serrage sur la tige filetée (18, 218) ou sur le tenon de serrage.

13. Unité de montage selon une la revendication 12, **caractérisée en ce que** l'ouverture de passage (19, 219) sur la deuxième pièce de pince (7, 207) est configurée comme un trou oblong orienté dans la direction longitudinale du rail.

14. Unité de montage selon une des revendications 1 à 13, **caractérisée en ce que** les pièces de pince (6, 7) de l'au moins une pince de retenue (2) peuvent coulisser de la position de retenue à la position d'ouverture contre la force de l'au moins un élément de ressort (13).

15. Unité de montage selon une des revendications 1 à 14, **caractérisée en ce que** la distance entre les griffes de pince (8) prévues sur les pièces de pince (6, 7) de l'au moins une pince de retenue (2) peut être augmentée depuis la position de retenue jusqu'à la position d'ouverture en poussant l'au moins une pince de retenue (2) sur le rail de montage (1) et/ou que les pièces de pince (6, 7) reviennent de la position d'ouverture dans la position de retenue sous l'effet de la force de rappel de l'au moins un élément de ressort (13).

16. Unité de montage selon une des revendications 1 à 15, **caractérisée en ce que**, sur la deuxième pièce de pince (7), il est prévu en guise d'élément de ressort (13) au moins un étrier élastique qui prend par-dessous la zone de bordure voisine de la première pièce de pince (6).

17. Unité de montage selon la revendication 16, **caractérisée en ce que** l'étrier élastique servant d'élément de ressort (13) appuie de façon élastique sur un plan incliné de la première pièce de pince (6) et que l'étrier élastique appuyant sur le plan incliné exerce une force de rappel dans la position de retenue des pièces de pince (6, 7).

18. Unité de montage selon la revendication 16 ou 17, **caractérisée en ce que** le(s) plan(s) incliné(s) donnant la forme au dos de la première pièce de pince (6) est/sont configuré(s) localement comme un plan incliné pour l'étrier élastique.

19. Unité de montage selon une des revendications 1 à 13, **caractérisée en ce que** les pièces de pince (206, 207) de l'au moins une pince de retenue (202) s'emboîtent par complémentarité de formes en position ouverte de telle sorte que ces pièces de pince (206, 207) restent en position ouverte et/ou que la complémentarité de formes des pièces de pince (206, 207) en position ouverte peut être supprimée par l'application d'une pression sur la deuxième pièce de pince (207) dans une direction de force orientée vers la première pièce de pince (206) de telle sorte que ces pièces de pince (206, 207) se meuvent en position de retenue ou de prémontage sous l'effet de la force de l'au moins un élément de ressort (213).

20. Unité de montage selon une des revendications 1 à 13 ou 19, **caractérisée en ce que** l'élément de ressort (213) est configuré comme au moins un ressort de compression disposé entre la première et la deuxième pièce de pince (206, 207) et en particulier comme une rondelle élastique dotée de plusieurs ondulations.

21. Unité de montage selon une des revendications 1 à 13 ou 19 à 20, **caractérisée en ce que** sur la deuxième pièce de pince (207) fait saillie latéralement, de préférence des deux côtés, au moins un ergot de retenue (222) qui est maintenu en position ouverte dans un palier de retenue (223) associé de la première pièce de pince (206), lequel palier de retenue (223) est ouvert dans la direction opposée à la deuxième pièce de pince (207).

22. Unité de montage selon une des revendications 1 à 13 ou 19 à 21, **caractérisée en ce que** sur la première pièce de pince (206) est prévue de préférence des deux côtés une coulisse de guidage (224), sur laquelle coulisse de guidage (224) se trouve un tenon coulissant (225), lequel tenon coulissant (225) fait saillie latéralement sur la deuxième pièce de pince (207).

23. Unité de montage selon la revendication 22, **caractérisée en ce que** l'ergot/les ergots de retenue (222) prévus sur au moins un côté longitudinal de la deuxième pièce de pince (207), d'une part, et le(s) tenon(s) coulissant(s) (225), d'autre part, sont espacés entre eux.

24. Unité de montage selon une des revendications 1 à 13 ou 19 à 23, **caractérisée en ce que** la première pièce de pince (206) porte sur ses côtés longitudinaux des parois de guidage (226) entre lesquelles la deuxième pièce de pince (207) est guidée en coulissement.

25. Unité de montage selon la revendication 24, **caractérisée en ce que** les parois de guidage (226) de la première pièce de pince (206) portent chacune d'un côté le palier de retenue (223) et de l'autre côté la coulisse de guidage (224).
